# EUROPÄISCHE PATENTSCHRIFT

(11) **EP 3 513 002 B1**
(45) Veröffentlichungstag und Bekanntmachung des Hinweises auf die Patenterteilung: **27.04.2022**
(21) Anmeldenummer: 17780982.9
(22) Anmeldetag: 31.08.2017
(51) Int. Cl.: E01B 11/12, E01B 11/24

(54) **SCHIENENSYSTEM FÜR EIN FÖRDERFAHRZEUG UND LAGERSYSTEM**
RAIL SYSTEM FOR A CONVEYING VEHICLE AND STORAGE SYSTEM
SYSTÈME DE RAILS POUR UN VÉHICULE DE TRANSPORT ET SYSTÈME DE STOCKAGE

(30) Priorität: 13.09.2016 AT 508182016
(43) Veröffentlichungstag der Anmeldung: 24.07.2019
(73) Patentinhaber: TGW Mechanics GmbH, 4600 Wels (AT)
(72) Erfinder: PREIDT, Peter, 4615 Holzhausen (AT); RAUSCH, Martin, 4810 Gmunden (AT)
(74) Vertreter: Burger, Hannes
(86) Internationale Anmeldenummer: PCT/AT2017/060214
(87) Internationale Veröffentlichungsnummer: WO 2018/049441

(56) Entgegenhaltungen:
- WO-A1-2010/118445
- CN-Y- 2 557 576
- DE-U1- 20 106 841
- US-A- 777 239
- US-A- 825 656

## Beschreibung

Die Erfindung betrifft ein Schienensystem für ein entlang diesem verfahrbaren Förderfahrzeug zum Einlagern von Stückgütern in ein Lagerregal bzw. Auslagern von Stückgütern aus einem Lagerregal, umfassend eine erste Fahrschiene, eine zweite Fahrschiene und eine Verbindungsvorrichtung, welche eine Formschlussverbindung zwischen den aufeinander zugerichteten Stirnenden der erste Fahrschiene und zweite Fahrschiene umfasst. Ferner betrifft die Erfindung ein Lagersystem mit zumindest einem Lagerregal und einem entlang dem Lagerregal verlaufenden Schienensystem und einem Förderfahrzeug zum Einlagern von Stückgütern in das Lagerregal bzw. Auslagern von Stückgütern aus dem Lagerregal, wobei das Schienensystem eine erste Fahrschiene und eine zweite Fahrschiene umfasst und Führungsbahnen ausbildet, wobei das Förderfahrzeug ein Fahrwerk mit auf den Führungsbahnen abrollbar anliegenden Laufrädern und einen Fahrantrieb zum Antrieb zumindest eines der Laufräder aufweist.

Die US 825,656 A offenbart ein gattungsgemäßes Schienensystem umfassend eine erste Fahrschiene und eine zweite Fahrschiene und eine Verbindungsvorrichtung, welche eine Formschlussverbindung zwischen den aufeinander zugerichteten Stirnenden der ersten Fahrschiene und zweiten Fahrschiene ausbildet.

Aus dem deutschen Gebrauchsmuster DE 201 06 841 U1 ist ein Schienensystem bekannt, welches eine erste Fahrschiene und eine zweite Fahrschiene umfasst, die an ihren einander zugewandten Stirnenden über zusätzliche Ankerstifte und Befestigungsschrauben miteinander verbunden werden.

Aus der US 777,239 A ist eine Verbindungsvorrichtung für ein Schienensystem bekannt, welche an einer ersten Fahrschiene einen Einhängehaken und an einer zweiten Fahrschiene eine Einhängeausnehmung umfasst.

Die US 886,259 A und US 4,485,967 A offenbaren ein Schienensystem umfassend eine erste Fahrschiene, eine zweite Fahrschiene und eine Verbindungsvorrichtung, welche eine Formschlussverbindung zwischen den aufeinander zugerichteten Stirnenden der ersten Fahrschiene und zweiten Fahrschiene ausbildet. Das Schienensystem umfasst zumindest eine Führungsbahn entlang der ersten Fahrschiene und zweiten Fahrschiene, an welcher ein Laufrad eines Fahrwerkes anrollbar anliegt. Konkret ist die Führungsbahn am Obergurt der ersten Fahrschiene und zweiten Fahrschiene ausgebildet. Die erste Fahrschiene bildet an ihrem Stirnende ein erstes Formschlusselement und einen ersten Flächenabschnitt aus. Die zweite Fahrschiene bildet an ihrem Stirnende ein zweites Formschlusselement und einen zweiten Flächenabschnitt aus. Konkret sind das erste Formschlusselement und das zweite Formschlusselement am Obergurt, Untergurt und Vertikalsteg angeordnet. Das erste Formschlusselement und zweite Formschlusselement grenzen an die zumindest eine Führungsbahn an. Nachteilig ist, dass das erste Stirnende und zweite Stirnende zueinander in einem Abstand gehalten sind und zwischen der ersten Fahrschiene und zweiten Fahrschiene ein Spalt entsteht, welcher zu einem erhöhten Verschleiß an einem Laufrad führt, wenn dieses über den Schienenstoß bewegt wird.

Ebenfalls offenbart die CN 2557576 Y ein gattungsgemäßes Schienensystem.

Die DD9472U offenbart ein Schienensystem mit einer ersten Fahrschiene und einer zweiten Fahrschiene, deren Stirnenden aufeinander zugerichtet und welche über zusätzliche Bolzen mit gegenseitigem Längsabstand miteinander verbunden sind.

Auch nach der DE 10 2008 031 153 B4 sind zusätzliche Dorne zwischen den Stirnenden der ersten Fahrschiene und zweiten Fahrschiene vorgesehen.

Auch ist es bekannt, dass die Stirnenden der ersten Fahrschiene und zweiten Fahrschiene miteinander verschweißt sind. Das Schweißen muss vor Ort auf der Baustelle erfolgen und gestaltet sich sehr aufwändig. Problematisch ist, wenn das Schweißen in brandgefährdeter Umgebung erfolgen muss. In diesem Fall müssen entsprechend aufwändige Brandschutzmaßnahmen getroffen werden.

In der JPS 64-14401 A ist eine Befestigungsvorrichtung für das Schienensystem beschrieben.

Die WO 2010/118445 A1 offenbart ein Förderfahrzeug zum Einlagern von Stückgütern in ein Lagerregal bzw. Auslagern von Stückgütern aus einem Lagerregal, welches entlang einem Schienensystem verfahrbar ist.

Der vorliegenden Erfindung liegt die Aufgabe zugrunde, ein Schienensystem aus zumindest zwei Fahrschienen bereitzustellen, bei dem die einzelnen Fahrschienen auf der Baustelle mit wenig Aufwand verbunden werden können. Das Schienensystem soll in einem Lagersystem mit einem schienengebundenen Förderfahrzeug eingesetzt werden können.

Die Aufgabe der Erfindung wird durch die Merkmale des Anspruches 1 gelöst.

Erfindungsgemäß ist das erste Formschlusselement einstückig am Stirnende der ersten Fahrschiene und das zweite Formschlusselement einstückig am Stirnende der zweiten Fahrschiene ausgebildet. Die Formschlussverbindung zwischen der ersten Fahrschiene und zweiten Fahrschiene benötigt keine zusätzlichen Verbindungselemente, wie Bolzen, Passstifte. Das erste Formschlusselement und zweite Formschlusselement sind beispielweise im spanabhebenden Fertigungsverfahren oder im Umformverfahren hergestellt. Insbesondere ist es von Vorteil, dass die erste Fahrschiene und zweite Fahrschiene werksseitig vorgefertigt werden können und auf der Baustelle lediglich die Formschlussverbindung hergestellt werden muss. Eine nachträgliche Bearbeitung der Fahrschienenverbindung kann in den meisten Fällen entfallen. Wenn eine Bearbeitung notwendig sein sollte, so beschränkt sich diese auf das Verschleifen der Fahrschienenverbindung an einer der Führungsbahnen oder den Führungsbahnen.

Erfindungsgemäß ist vorgesehen, dass der erste Flächenabschnitt und der zweite Flächenabschnitt an die Führungsbahnen angrenzen, und das erste Formschlusselement und zweite Formschlusselement komplementär ineinandergreifen und die Stirnenden der ersten Fahrschiene und zweiten Fahrschiene mit den Flächenabschnitten stumpf aneinander anliegen, sodass ein "nahezu spaltfreier" Übergang an den Führungsbahnen zwischen der ersten Fahrschiene und zweiten Fahrschiene entsteht. Der Begriff "nahezu spaltfrei" kann dabei so verstanden werden, dass ein Spaltmaß abhängig von den Fertigungstoleranzen an den Flächenabschnitten resultiert und maximal 0,2 mm betragen wird. Eine nachträgliche Bearbeitung der Fahrschienenverbindung im Bereich einer der Führungsbahnen oder den Führungsbahnen kann in den meisten Fällen entfallen. Wenn eine Bearbeitung notwendig sein sollte, so beschränkt sich diese auf das Verschleifen der Fahrschienenverbindung an einer der Führungsbahnen oder den Führungsbahnen. Eine zusätzliche stoffflüssige Verbindung, beispielweise durch Schweißen mit Zusatzwerkstoff kann entfallen.

Der im Wesentlichen "spaltfreie" Übergang an einer Führungsbahn ist dabei ganz entscheidend für die Belastung auf ein Laufrad. Ein Laufrad kann den Verbindungsstoß, insbesondere an einer horizontalen Führungsbahn, auf der das Regalbediengerät mit dem Eigengewicht / Nutzlastgewicht über das Laufrad abrollbar aufliegt, schonend überrollen. Dadurch eignet sich das Schienensystem besonders für hochdynamische Regalbediengeräte und/oder Regalbediengeräte mit hohem Eigengewicht / Nutzlastgewicht.

Ebenfalls erfindungsgemäß ist, dass das erste Formschlusselement durch mehr als eine in dem Stirnende vertieft angeordnete Positionieröffnung und das zweite Formschlusselement durch mehr als einen an dem Stirnende senkrecht vorragenden Positioniervorsprung gebildet sind. Eine Positionieröffnung ist bevorzugt als eine einseitig geöffnete Nut gestaltet und grenzt an eine in Längsrichtung des Schienensystems an der ersten Fahrschiene ausgebildeten Führungsbahn für ein Laufrad des Förderfahrzeuges an. Ein Positioniervorsprung ist bevorzugt als ein Zapfen gestaltet und grenzt an eine in Längsrichtung des Schienensystems an der zweiten Fahrschiene ausgebildeten Führungsbahn für ein Laufrad des Förderfahrzeuges an.

Insbesondere erweist es sich von Vorteil, wenn die erste Fahrschiene und die zweite Fahrschiene mit wenigstens einer in Längsrichtung des Schienensystems verlaufenden Führungsbahn für ein Laufrad des Förderfahrzeuges versehen sind, und dass das erste Formschlusselement und das zweite Formschlusselement einander zugewandte Anlageflächen ausbilden und in senkrechter Richtung auf die wenigstens eine Führungsbahn mit den Anlageflächen gegeneinander abgestützt sind. Die Anlageflächen verlaufen bevorzugt parallel zu einer in Längsrichtung des Schienensystems verlaufenden Längsebene. Grundsätzlich können die Anlageflächen aber auch geneigt verlaufen und mit der Längsebene einen Winkel einschließen. Es können von der Formschlussverbindung (erstes Formschlusselement und zweites Formschlusselement) hohe Seitenkräfte in senkrechter Richtung auf die wenigstens eine Führungsbahn bzw. Längsebene aufgenommen werden. Dies ist insbesondere von Vorteil, wenn der Fahrantrieb für das Förderfahrzeug mit einem auf der wenigstens einen Führungsbahn abrollbar anliegenden Antriebsrad ausgestattet ist und die Antriebskraft kraftschlüssig auf die Fahrschienen übertragen wird.

Gemäß einer erfindungsgemäßen Ausführung der Erfindung bildet die erste Fahrschiene und zweite Fahrschiene jeweils einen Untergurt, einen Obergurt und einen diese verbindenden Vertikalsteg aus. Dabei ist es von Vorteil, wenn das erste Formschlusselement am Vertikalsteg der ersten Fahrschiene und das zweite Formschlusselement am Vertikalsteg der zweiten Fahrschiene ausgebildet sind. Am Vertikalsteg sind die Zug- und Druckbeanspruchungen geringer als im Untergurt und Obergurt, womit dauerhaft eine zuverlässige Formschlussverbindung zwischen der ersten Fahrschiene und zweiten Fahrschiene erreicht wird.

Von Vorteil ist, wenn der erste Flächenabschnitt am Untergurt und/oder Obergurt der ersten Fahrschiene ausgebildet ist. Der erste Flächenabschnitt kann auch am Vertikalsteg ausgebildet sein und an das erste Formschlusselement angrenzen. Der zweite Flächenabschnitt ist am Untergurt und/oder Obergurt der zweiten Fahrschiene ausgebildet. Der zweite Flächenabschnitt kann auch am Vertikalsteg ausgebildet sein und an das zweite Formschlusselement angrenzen. Sind die erste Fahrschiene und die zweiten Fahrschiene mit den Stirnenden aufeinander ausgerichtet und positioniert, so liegen die Stirnenden der ersten Fahrschiene und zweiten Fahrschiene mit den Flächenabschnitten stumpf aneinander, während die Formschlusselemente in Längsrichtung des Schienensystems zueinander positioniert sind. Es wird ein nahezu spaltfreier Übergang zwischen der ersten Fahrschiene und zweiten Fahrschiene erreicht. Das Antriebsrad kann den Verbindungsstoß besonders schonend überrollen. Damit steigt die Verfügbarkeit des Förderfahrzeuges.

Gemäß einer Ausführung der Erfindung kann die Verbindungsvorrichtung eine Anordnung zum Fixieren einer Relativlage zwischen der ersten Fahrschiene und zweiten Fahrschiene umfassen. Mit anderen Worten, werden nach dem Positionieren der ersten Fahrschiene und zweiten Fahrschiene relativ zueinander in Längsrichtung des Schienensystems, mittels der Anordnung die erste Fahrschiene und zweite Fahrschiene derart zueinander fixiert gehalten, dass auch im Betrieb des Förderfahrzeuges die Stirnenden der ersten Fahrschiene und zweiten Fahrschiene mit den Flächenabschnitten stumpf aneinander liegen.

Die Anordnung zum Fixieren einer Relativlage zwischen der ersten Fahrschiene und zweiten Fahrschiene bzw. die Verbindungsvorrichtung kann einen Verbindungsträger umfassen, der über ein erstes Fixiermittel mit einem Endbereich der ersten Fahrschiene und über ein zweites Fixiermittel mit einem Endbereich der zweiten Fahrschiene verbunden ist. Auch wenn der Verbindungsträger nicht zwingenderweise notwendig ist, erweist es sich von Vorteil, die erste Fahrschiene und zweite Fahrschiene über den Verbindungsträger miteinander zu koppeln. Der Verbindungsträger umfasst eine Basisplatte, auf welcher die erste Fahrschiene und zweite Fahrschiene mit ihren Endbereichen aufliegen. Dadurch können die erste Fahrschiene und zweite Fahrschiene in einer Richtung senkrecht auf die Basisplatte zueinander ausgerichtet werden.

Dabei kann es sich von Vorteil erweisen, wenn eine Formschlussverbindung zwischen dem Verbindungsträger und der ersten Fahrschiene, und eine Formschlussverbindung zwischen dem Verbindungsträger und der zweiten Fahrschiene, vorgesehen sind.

Günstig ist, wenn die erste Fahrschiene am Untergurt nahe dem Stirnende ein erstes Formschlusselement und die zweite Fahrschiene am Untergurt nahe dem Stirnende ein zweites Formschlusselement ausbildet, und der Verbindungsträger ein erstes Formschlusselement und ein zweites Formschlusselement aufweist, wobei einerseits das erste Formschlusselement am Untergurt der ersten Fahrschiene und das erste Formschlusselement am Verbindungsträger komplementär ineinandergreifen und andererseits das zweite Formschlusselement am Untergurt der zweiten Fahrschiene und das zweite Formschlusselement am Verbindungsträger komplementär ineinandergreifen.

Durch die Formschlussverbindungen kann das Schienensystem höchsten Zugkräften ausgesetzt werden, wie diese im gewöhnlichen Betrieb eines Förderfahrzeuges auftreten können. Das Förderfahrzeug kann hochdynamisch entlang dem Schienensystem bewegt werden, was sich positiv auf die Einlager- und Auslagerleistung des Förderfahrzeuges auswirkt.

Wird kein Verbindungsträger eingesetzt, so wird die Anordnung zum Fixieren einer Relativlage zwischen der ersten Fahrschiene und zweiten Fahrschiene durch zumindest eine Befestigungsvorrichtung je Fahrschiene bereitgestellt, wobei die Befestigungsvorrichtung eine unterhalb vom Schienensystem angeordnete und zu beiden Seiten des Schienensystems mit Montageabschnitten vorragende Trägerplatte und eine Klemmeinheit zum Montieren des Schienensystems an der Trägerplatte aufweist. Die Klemmeinheit umfasst zu beiden Seiten des Schienensystems angeordnete Klemmplatten und je Klemmplatte ein Spannmittel.

In einer bevorzugten Ausgestaltung der Erfindung sind die Fahrschienen im Umformverfahren und durch Ablängen auf eine Normlänge hergestellt und mit einer Markierung versehen. Damit ist nach dem Ablängen des Fahrschienenprofils auf mehrere Stücke einzelner Fahrschienen eine eindeutige Zuordnung der Orientierung der (bevorzugt symmetrisch gestalteten) Fahrschienen möglich.

Die Aufgabe der Erfindung wird aber auch dadurch gelöst, dass das Schienensystem in einem Lagersystem eingesetzt wird, bei dem ein (rechnergesteuertes) Förderfahrzeug entlang dem Schienensystem hochdynamisch bewegt wird.

Es erweist sich von Vorteil, wenn das Schienensystem über entlang der ersten Fahrschiene und zweiten Fahrschiene verteilt angeordnete Befestigungsvorrichtungen auf Schienenstützplatten gelagert ist, wobei die Schienenstützplatten an einem Anschlussbauteil verankert sind. Die erste Fahrschiene und zweite Fahrschiene bilden jeweils einen Untergurt, einen Obergurt und einen diese verbindenden Vertikalsteg aus. Die Befestigungsvorrichtungen umfassen jeweils eine unterhalb vom Schienensystem angeordnete und zu beiden Seiten des Schienensystems mit Montageabschnitten vorragende Trägerplatte und eine Klemmeinheit zum Montieren des Schienensystems an der Trägerplatte. Die Klemmeinheit umfasst zu beiden Seiten des Schienensystems angeordnete Klemmplatten und je Klemmplatte ein Spannmittel, wobei die Klemmplatten jeweils einen mit einer Anpresskraft gegen den Untergurt anliegenden Spannabschnitt und einen an der Trägerplatte in dem Montageabschnitt aufliegenden Stützabschnitt und eine Durchgangsöffnung zur Aufnahme des Spannmittels ausbilden, und die Spannmittel an den Montageabschnitten verankert sind. Mit diesem Klemmsystem kann ein besonders rasche Montage des Schienensystems erfolgen.

Eine exakte Nivellierung des Schienensystems wird erreicht, wenn die Trägerplatte an den Montageabschnitten jeweils über eine Höhenverstellvorrichtung an der Schienenstützplatte montiert ist.

Zum besseren Verständnis der Erfindung wird diese anhand der nachfolgenden Figuren näher erläutert.

Es zeigen jeweils:
- Fig. 1: einen Ausschnitt eines Lagersystems mit einem Förderfahrzeug, in Draufsicht auf eine Regalebene;
- Fig. 2: das Lagersystem in Ansicht gemäß der Linie II in Fig. 1;
- Fig. 3: eine erste Ausführung eines Schienensystems für das Förderfahrzeug und Befestigungsvorrichtungen für das Schienensystem in perspektivischer Ansicht;
- Fig. 4: eine Seitenansicht auf das Schienensystem mit den Fahrschienenabschnitten, die Befestigungsvorrichtungen und die schematisch eingetragenen Laufräder des Förderfahrzeuges;
- Fig. 5: eine erste Ausführung einer Verbindungsvorrichtung für die Fahrschienen beispielweise des Schienensystem gemäß Fig. 3 in Explosionsdarstellung;
- Fig. 6: die Fahrschienen des Schienensystems in perspektivischer Ansicht und Ansicht auf das Stirnende der ersten Fahrschiene;
- Fig. 7: die Fahrschienen des Schienensystems in perspektivischer Ansicht und Ansicht auf das Stirnende der zweiten Fahrschiene;
- Fig. 8: die erste Fahrschiene in Stirnansicht;
- Fig. 9: die zweite Fahrschiene in Stirnansicht;
- Fig. 10: eine Schnittdarstellung durch die Formschlussverbindung der ineinandergreifenden Formschlusselemente, gemäß der Linie X in Fig. 4;
- Fig. 11: eine zweite Ausführung einer Verbindungsvorrichtung für die Fahrschienen einer zweiten Ausführung eines Schienensystems, in Explosionsdarstellung;
- Fig. 12: eine Seitenansicht auf das Schienensystem gemäß der Ausführung in Fig. 11 und mit den ineinandergreifenden Formschlusselementen;
- Fig. 13: eine Schnittdarstellung durch die Formschlussverbindung der ineinandergreifenden Formschlusselemente, gemäß der Linie XIII in Fig. 12;
- Fig. 14: eine erste Fahrschiene in Stirnansicht einer nicht erfindungsgemäßen Verbindungsvorrichtung;
- Fig. 15: eine zweite Fahrschiene in Stirnansicht einer nicht erfindungsgemäßen Verbindungsvorrichtung;
- Fig. 16: eine Schnittdarstellung durch die Formschlussverbindung der ineinandergreifenden Formschlusselemente des Schienensystems mit der nicht erfindungsgemäßen Verbindungsvorrichtung;
- Fig. 17: eine Schnittdarstellung durch die Befestigungsvorrichtung gemäß der Linie XVII-XVII in Fig. 4;
- Fig. 18: eine Ausschnittsvergrößerung aus Fig. 17.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

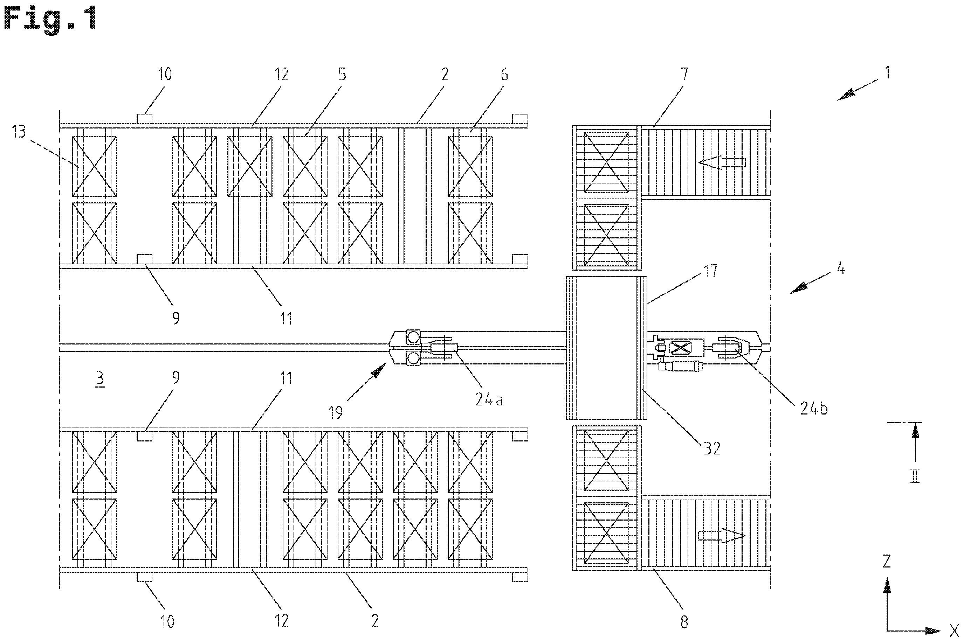

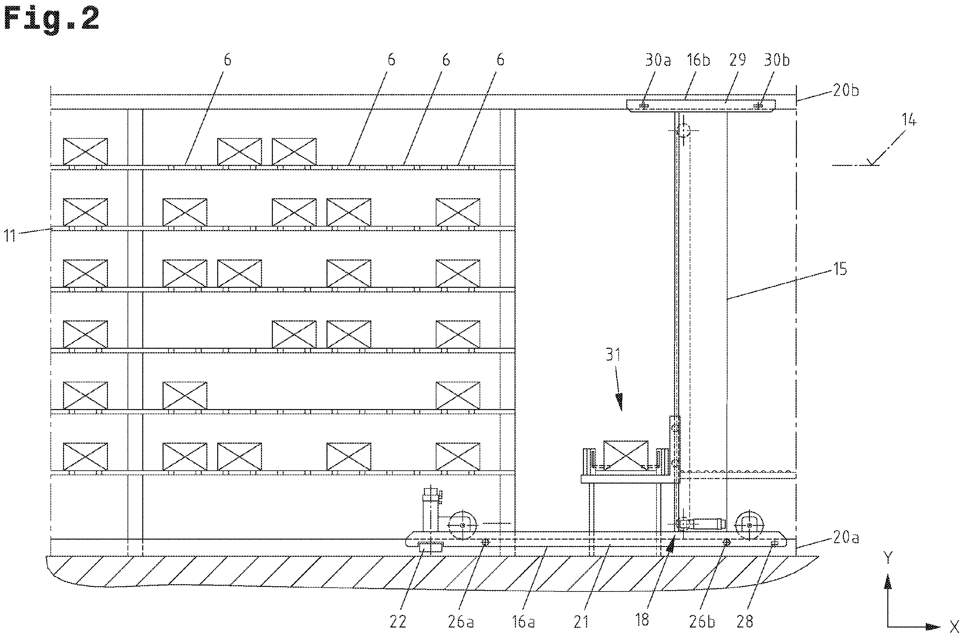

In den Fig. 1 und 2 ist eine mögliche Ausführung eines Lagersystems 1 in unterschiedlichen Ansichten gezeigt. Das Lagersystem 1 umfasst nach gezeigter Ausführung parallel angeordnete Lagerregale 2, ein in einer Regalgasse 3 (x-Richtung) angeordnetes (rechnergesteuertes) Förderfahrzeug 4 zum Transport von Stückgütern 5 zu Lagerplätzen 6 bzw. Transport von Stückgütern 5 von den Lagerplätzen 6 und eine automatisierte Fördertechnik zum Antransport von Stückgütern 5 und Abtransport von Stückgütern 5. Die automatisierte Fördertechnik kann eine erste Fördervorrichtung 7 zum Antransport der Stückgüter 5 zum Förderfahrzeug 4 und eine zweite Fördervorrichtung 8 zum Abtransport von Stückgütern 5 vom Förderfahrzeug 4 umfassen. Das Lagersystem 1 kann auch mehr als zwei Lagerregale 2 aufweisen, wobei zwischen benachbarten Lagerregalen 2 jeweils eine Regalgasse 3 ausgebildet ist und in jeder dieser Regalgassen 3 ein (rechnergesteuertes) Förderfahrzeug 4 angeordnet ist. Auch kann nur ein einziges Lagerregal 2 vorgesehen werden.

Die beispielhaft gezeigten Lagerregale 2 können jeweils der Regalgasse 3 benachbarte, vertikale vordere Regalsteher 9 und von der Regalgasse 3 entfernte, vertikale hintere Regalsteher 10 umfassen. Die vorderen Regalsteher 9 sind mit in Richtung der Regalgasse 3 horizontal verlaufenden vorderen Längstraversen 11 und die hinteren Regalsteher 10 mit in Richtung der Regalgasse 3 horizontal verlaufenden hinteren Längstraversen 12 verbunden. Zwischen den Längstraversen 11, 12 können Querträger 13 vorgesehen werden, welche sich in Tiefenrichtung eines Lagerregales 1 (z-Richtung) erstrecken. In diesem Fall bilden die Querträger 13 eine Lagerfläche bzw. Lagerplätze 6 aus. Ein Stückgut 5 lagert je nach Breitenabmessung auf zumindest zwei Querträgern 13.

Somit bildet jedes Lagerregal 2 in übereinander liegenden Lagerebenen 14 jeweils nebeneinander eine Vielzahl von Lagerplätzen 6 aus. Dabei werden die Stückgüter 5 in Tiefenrichtung (z-Richtung) des Lagerregales 5 auf den an hintereinander liegenden Tiefenpositionen vorhandenen Lagerplätzen 6 gelagert. Jedem Lagerplatz 6 wird ein Stückgut 5 zugeteilt. Die Anzahl der hintereinander liegenden Lagerplätze 6 kann abhängig von einer Längenabmessung des Stückgutes 5 variieren. So können in Tiefenrichtung (z-Richtung) beispielweise vier Stückgüter 5, drei Stückgüter 5 oder zwei Stückgüter 5 gelagert werden. Dem Fachmann ist diese Art der Lagerung als mehrfache tiefe Lagerung bekannt. Es wäre aber auch möglich, dass in Tiefenrichtung (z-Richtung) bloß ein Stückgut 5 gelagert wird. Dem Fachmann ist diese Art der Lagerung als einfachtiefe Lagerung bekannt. Auch wenn aus Gründen der besseren Übersicht die Stückgüter 5 in den Figuren mit gleicher Breite eingetragen sind, können diese auch unterschiedliche Breiten- und/oder Längenabmessungen haben. Die Stückgüter 5 sind beispielweise Packeinheiten (Collis) oder Ladehilfsmittel (LHM), wie Kartons, Tablare oder Behälter etc..

Das in den Fig. 1 und 2 gezeigte Förderfahrzeug 4 ist durch ein Regalbediengerät gebildet, wie es beispielweise aus der EP 2 419 365 B1 bekannt geworden ist.

Das Regalbediengerät umfasst einen vertikalen Mast 15, ein am Mastfuß befestigtes unteres Fahrwerk 16a, ein am Mastkopf befestigtes oberes Fahrwerk 16b, zumindest eine am Mast 15 angeordnete Aufnahmeplattform 17, einen Hubantrieb 18 zum Bewegen der Aufnahmeplattform 17 in y-Richtung und einen Fahrantrieb 19 zum Bewegen des Regalbediengerätes in x-Richtung. Das untere Fahrwerk 16a ist an einem unteren Schienensystem 20a und das obere Fahrwerk 16b an einem oberen Schienensystem 20b geführt. Das untere Schienensystem 20a wird über (in den Fig. 1 und 2 nicht dargestellte) Befestigungsvorrichtungen am Boden eines Gebäudes montiert. Das obere Schienensystem 20b kann entweder über (nicht dargestellte) Traversen an den Lagerregalen 2 befestigt oder über (nicht dargestellte) Befestigungsvorrichtungen an der Decke eines Gebäudes montiert werden. Das untere Schienensystem 20a und obere Schienensystem 20b sind nach dieser Ausführung in der Regalgasse 3 angeordnet und verlaufen zwischen den Lagerregalen 2. Ist nur ein Lagerregal 2 vorgesehen, verlaufen das untere Schienensystem 20a und obere Schienensystem 20b entlang diesem Lagerregal 2. Wie erkennbar, ist das Regalbediengerät über den Fahrantrieb 19 in x-Richtung verfahrbar an den Schienensystemen 20a, 20b gelagert.

Das untere Fahrwerk 16a umfasst den Fahrantrieb 19 und einen unteren Fahrrahmen 21. Der Fahrantrieb 19 ist durch zumindest einen elektrischen Antriebsmotor und ein an diesen gekuppeltes Antriebsrad 22 (bzw. Laufrad) gebildet. Bevorzugt sind zwei Antriebsmotoren und zwei Antriebsräder 22 (bzw. Laufräder) vorgesehen. Die Kraftübertragung des unteren Fahrwerkes 16a auf das Schienensystem 20a erfolgt über die angetriebenen, kraftschlüssig wirkenden Antriebsräder 22.

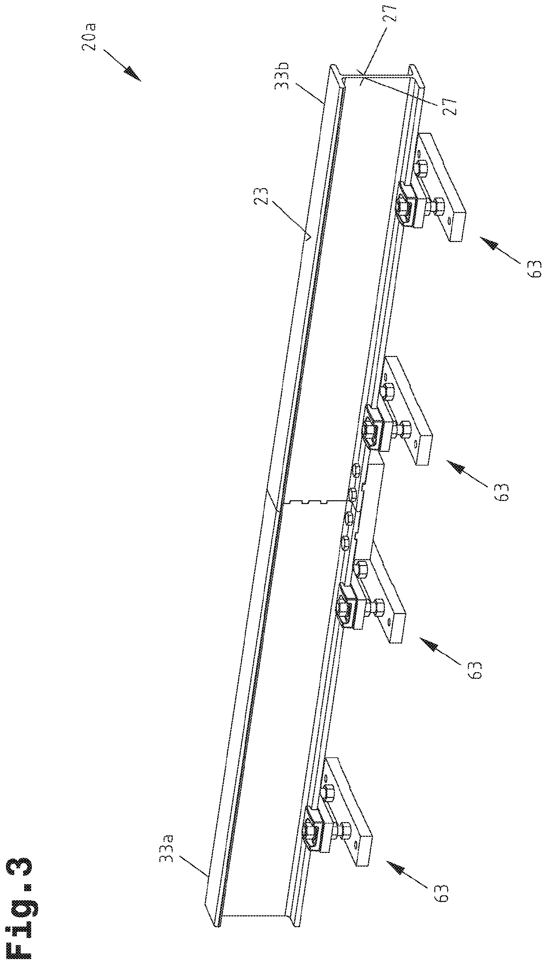

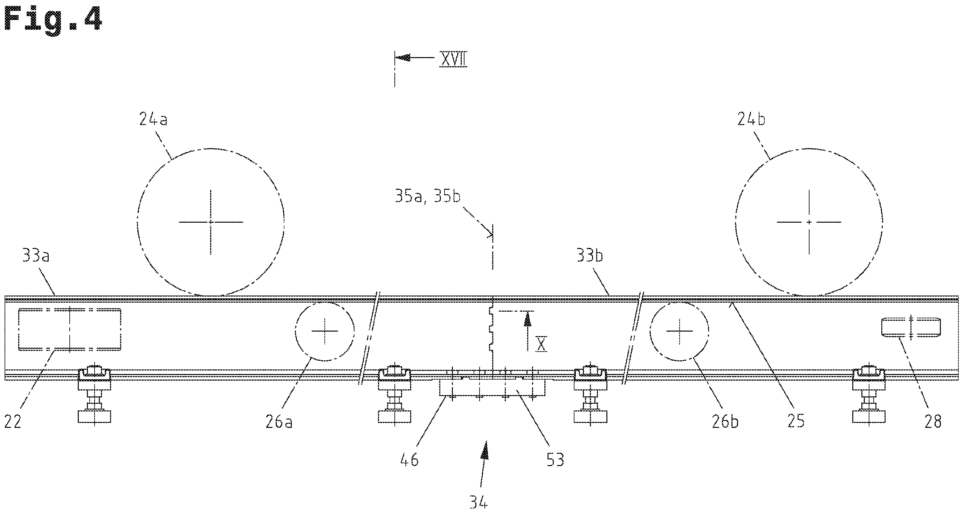

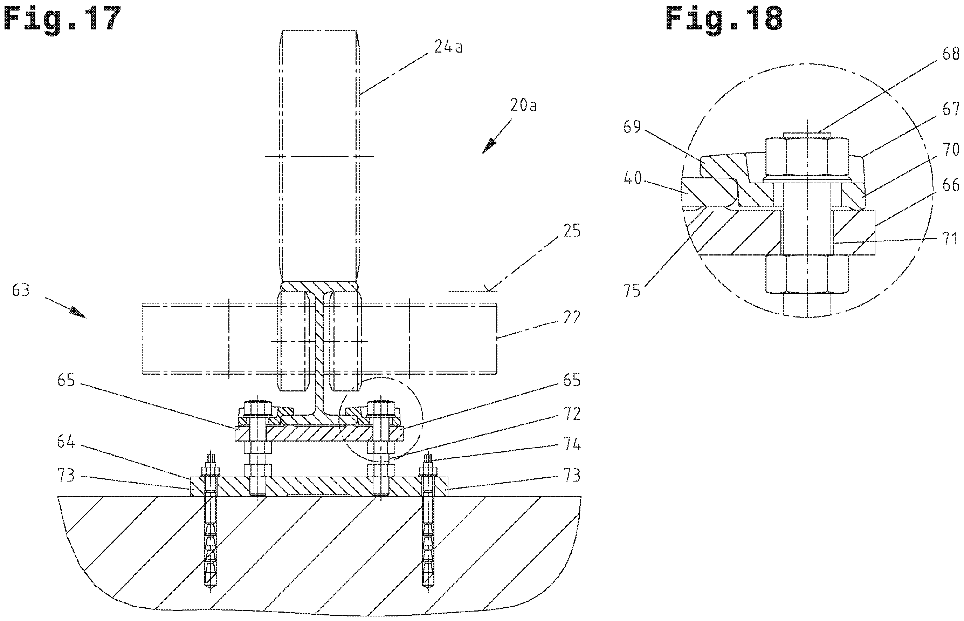

Am Fahrrahmen 21 sind in Bewegungsrichtung des Regalbediengerätes (x-Richtung) beidseitig des Mastes 15 hintereinander auf einer ersten Führungsbahn 23 (Fig. 3) des Schienensystems 20a abrollbar anliegende und um horizontale Achsen drehbare Laufräder 24a, 24b gelagert sind. Zusätzlich sind am Fahrrahmen 21 in Bewegungsrichtung des Regalbediengerätes (x-Richtung) beidseitig des Mastes 15 hintereinander auf einer zweiten Führungsbahn 25 (Fig. 4, 17) des Schienensystems 20a abrollbar anliegende Paare nebeneinander liegender und um horizontale Achsen drehbare Laufräder (Gegenrollen) 26a, 26b gelagert. Die Seitenführung des unteren Fahrwerkes 16a wird an einem Ende des Fahrrahmens 21 durch an dritten Führungsbahnen 27 (Fig. 3) des Schienensystems 20a abrollbar anliegende und um senkrechte Achsen drehbare, paarweise nebeneinander liegende Laufräder (Führungsrollen) 28 und am anderen Ende des Fahrrahmens 21 durch die an der dritten Führungsbahn 27 des Schienensystems 20a abrollbar anliegenden und um senkrechte Achsen drehbare, paarweise nebeneinander liegenden Antriebsräder 22 erreicht.

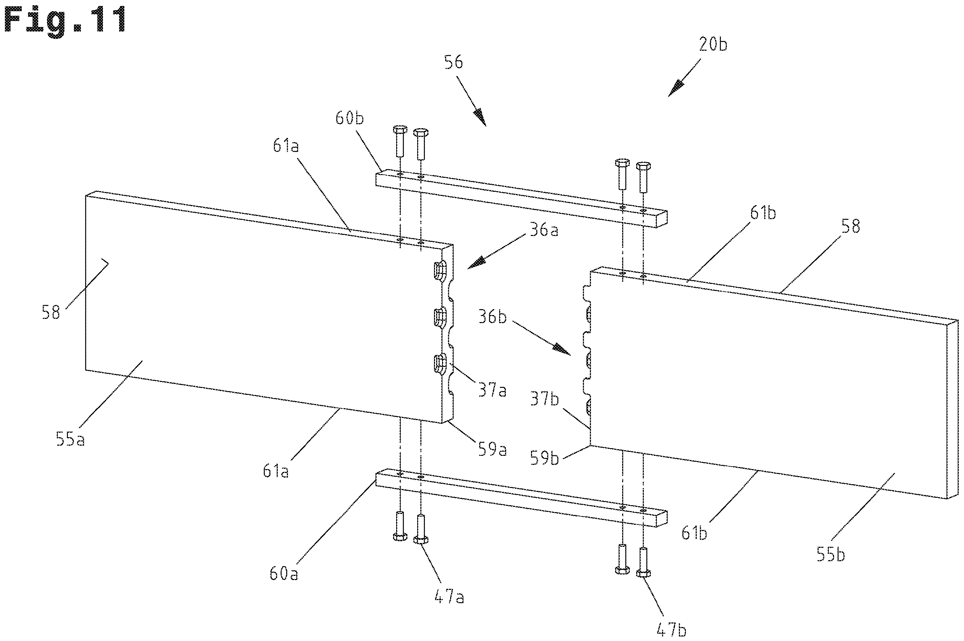

Das obere Fahrwerk 16b umfasst einen oberen Fahrrahmen 29, an welchem zwei um senkrechte Achsen drehbare Paare von Laufräder (Führungsrollen) 30a, 30b gelagert sind, die beidseitig des Mastes 15 in Bewegungsrichtung des Regalbediengerätes (x-Richtung) hintereinander an vertikalen Führungsbahnen 58 (Fig. 11) des oberen Schienensystems 20 b abrollbar anliegen.

Es sei ausdrücklich hingewiesen, dass dieses beschriebene Antriebs- und Führungskonzept eines von vielen Möglichkeiten darstellt. Denkbar ist auch ein in der DE 195 34 291 A1 offenbartes Antriebs- und Führungskonzept. Beispielweise kann das Regalbediengerät auch nur ein Laufrad 24a umfassen. Dieses Laufrad 24a kann auch angetrieben sein.

Auch wenn nach gezeigter Ausführung das Regalbediengerät mit dem unteren Fahrwerk 16a am unteren Schienensystem 20a und mit dem oberen Fahrwerk 16b am oberen Schienensystem 20b geführt ist, wäre es auch möglich, dass das Regalbediengerät bloß mit dem unteren Fahrwerk 16a am unteren Schienensystem 20a geführt ist. In diesem Fall kann das obere Fahrwerk 16b und das obere Schienensystem 20b entfallen.

Wie in Fig. 2 ersichtlich, ist die Aufnahmeplattform 17 über den Hubantrieb 18 in y-Richtung höhenverstellbar am vertikalen Mast 15 gelagert. Der Hubantrieb ist durch einen Zugmitteltrieb und zumindest einen mit diesem gekuppelten elektrischen Antriebsmotor gebildet. Auf der Aufnahmeplattform 17 können ein einziges Stückgut 5 oder auch mehrere Stückgüter 5 transportiert werden.

Das Förderfahrzeug 4 ist mit wenigstens einer Transportvorrichtung 31 versehen, mittels welcher die Stückgüter 5 auf die Lagerplätze 6 eingelagert oder die Stückgüter 5 von den Lagerplätzen 6 ausgelagert werden. Die Transportvorrichtung 31 kann in einer Querrichtung (z-Richtung) aus einer Ausgangsstellung nach beiden Richtungen synchron ausfahrbare Teleskopiereinheiten 32 umfassen, sodass die zu beiden Seiten des Förderfahrzeuges 4 angeordneten Lagerregale 2 bedient werden können.

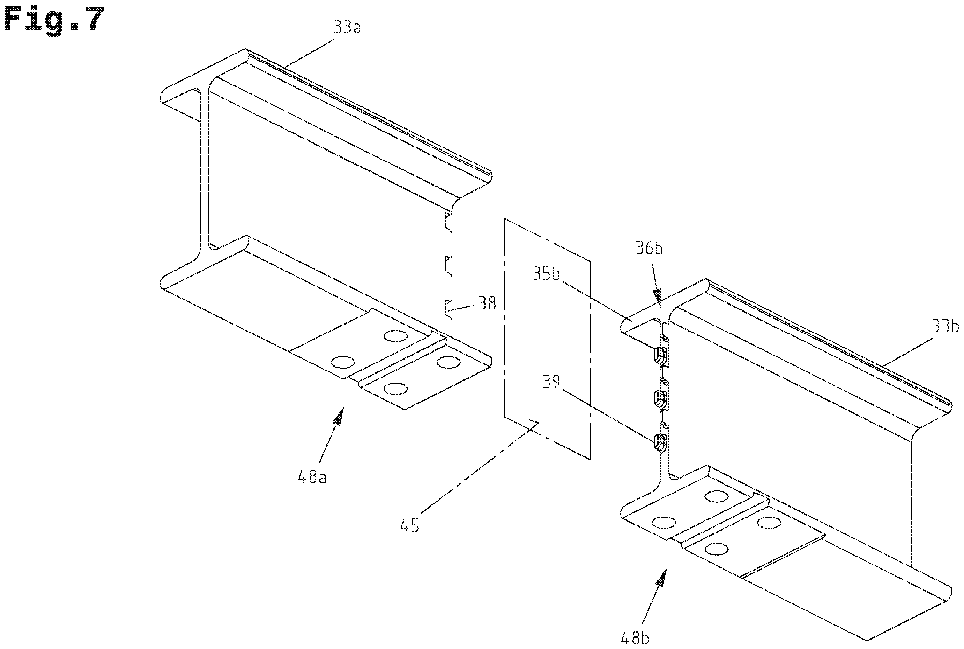

In den Fig. 3 bis 10 ist eine erste Ausführung des Schienensystems, insbesondere das untere Schienensystem 20a gezeigt, wobei noch näher zu beschreibende Befestigungsvorrichtungen 63 ausschließlich in den 3 und 4 dargestellt sind.

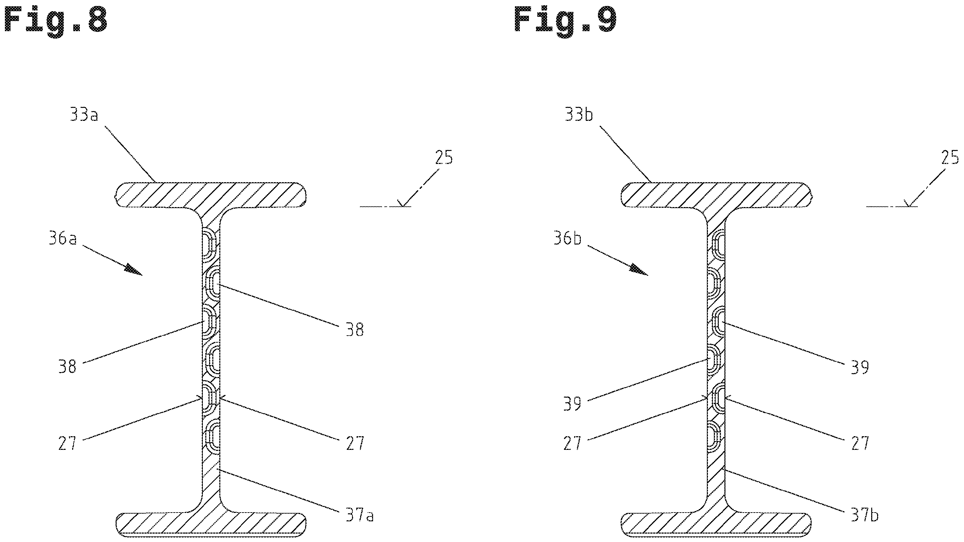

Das Schienensystem 20a umfasst eine erste Fahrschiene 33a, eine zweite Fahrschiene 33b und eine Verbindungsvorrichtung 34. Die Verbindungsvorrichtung 34 weist zumindest eine Formschlussverbindung zwischen den aufeinander zugerichteten Stirnenden 35a, 35b der erste Fahrschiene 33a und zweite Fahrschiene 33b auf. Die erste Fahrschiene 33a bildet an ihrem Stirnende 35a ein erstes Formschlusselement 36a und einen ersten Flächenabschnitt 37a aus. Der erste Flächenabschnitt 37a ist in Fig. 8 schraffiert dargestellt. Das Stirnende 35a verläuft in einer Querschnittsebene senkrecht zur Längserstreckung der ersten Fahrschiene 33a. Die zweite Fahrschiene 33b bildet an ihrem Stirnende 35b ein zweites Formschlusselement 36b und einen zweiten Flächenabschnitt 37b aus. Der zweite Flächenabschnitt 37b ist in Fig. 9 schraffiert dargestellt. Das Stirnende 35b verläuft in einer Querschnittsebene senkrecht zur Längserstreckung der zweiten Fahrschiene 33b.

Die erste Fahrschiene 33a und zweite Fahrschiene 33b bilden zumindest eine Führungsbahn aus, welche in Längsrichtung des Schienensystems 20a verläuft und entlang welcher ein oder mehrere Laufräder 22 (das Laufrad entspricht dem Antriebsrad); 24a, 24b; 26a, 26b; 28 des Förderfahrzeuges 4 abrollbar anliegen.

Wie im Nachfolgenden beschrieben, kann beispielweise ein Obergurt 41 der ersten Fahrschiene 33a und ein Obergurt 41 der zweiten Fahrschiene 33b mit der Führungsbahn, insbesondere die erste Führungsbahn 23 ausgebildet werden, wie in Fig. 3 eingetragen. Die erste Führungsbahn 23 ist dabei an der Oberseite des Obergurtes 41 angeordnet.

Auch ist es möglich, dass ein Obergurt 41 der ersten Fahrschiene 33a und ein Obergurt 41 der zweiten Fahrschiene 33b die Führungsbahn, insbesondere die zweite Führungsbahn 25 ausbildet, wie in Fig. 4 eingetragen. Die zweite Führungsbahn 25 ist dabei an der Unterseite des Obergurtes 41 angeordnet. Die erste Fahrschiene 33a und zweite Fahrschiene 33b können sowohl die erste Führungsbahn 23 als auch die zweite Führungsbahn 25 ausbilden. Die erste Führungsbahn 23 und zweite Führungsbahn 25 sind also verschiedene Führungsbahnen.

Wie im Nachfolgenden beschrieben, kann beispielweise ein Vertikalsteg 42 der ersten Fahrschiene 33a und ein Vertikalsteg 42 der zweiten Fahrschiene 33b mit der Führungsbahn, insbesondere die dritte Führungsbahn 27 ausgebildet werden, wie in Fig. 8, 9 eingetragen. Bevorzugt ist der Vertikalsteg 42 mit einander gegenüberliegenden dritten Führungsbahnen 27 versehen.

Wie in den Fig. ersichtlich, verläuft der erste Flächenabschnitt 37a in einer Querschnittsebene senkrecht zur ersten Fahrschiene 33a und verläuft der zweite Flächenabschnitt 37b in einer Querschnittsebene senkrecht zur zweiten Fahrschiene 33b. Der erste Flächenabschnitt 37a und der zweite Flächenabschnitt 37b grenzen jeweils an die zumindest eine Führungsbahn an.

Das erste Formschlusselement 36a und zweite Formschlusselement 36b sind derart ausgebildet und angeordnet, dass diese komplementär ineinandergreifen und die Stirnenden 35a, 35b der ersten Fahrschiene 33a und zweiten Fahrschiene 33b mit den Flächenabschnitten 37a, 37b stumpf aneinander anliegen, wenn die erste Fahrschiene 33a und zweite Fahrschiene 33b zueinander positioniert sind. Es entsteht ein im Wesentlichen spaltfreier Übergang an der zumindest einen Führungsbahn, insbesondere der ersten Führungsbahn 23 und/oder zweiten Führungsbahn 25 und/oder zumindest in Flächenabschnitten der dritten Führungsbahn(en) 27 zwischen der ersten Fahrschiene 33a und zweiten Fahrschiene 33b. Der Begriff "spaltfreier Übergang" ist dabei so zu verstehen, dass das Spaltmaß zwischen den Flächenabschnitten 37a, 37b im Bereich der ersten Führungsbahn 23 und/oder zweiten Führungsbahn 25 maximal 0,2 mm beträgt.

Das erste Formschlusselement 36a kann mehr als eine in dem Stirnende 35a vertieft angeordnete Positionieröffnung 38, beispielweise sechs Positionieröffnungen 38 umfassen. Das zweite Formschlusselement 36b kann mehr als einen an dem Stirnende 35b senkrecht vorragenden Positioniervorsprung 39, beispielweise sechs Positioniervorsprünge 39 umfassen.

Nach gezeigter Ausführung bilden die Fahrschienen 33a, 33b jeweils einen Untergurt 40, einen Obergurt 41 und einen diese verbindenden Vertikalsteg 42 aus.

Wie aus den Fig. ersichtlich, ist das erste Formschlusselement 36a am Vertikalsteg 42 der ersten Fahrschiene 33a und das zweite Formschlusselement 36b am Vertikalsteg 42 der zweiten Fahrschiene 33b ausgebildet. Der erste Flächenabschnitt 37a grenzt an das erste Formschlusselement 36a, insbesondere die Positionieröffnungen 38 an und erstreckt sich bis in den Untergurt 40 und Obergurt 41. Der zweite Flächenabschnitt 37b grenzt an das zweite Formschlusselement 36b, insbesondere die Positioniervorsprünge 39 an und erstreckt sich bis in den Untergurt 40 und Obergurt 41. In einer vorteilhaften Ausführung ist am Untergurt 40 und Obergurt 41 das erste Formschlusselement 36a / zweite Formschlusselement 36b nicht vorgesehen.

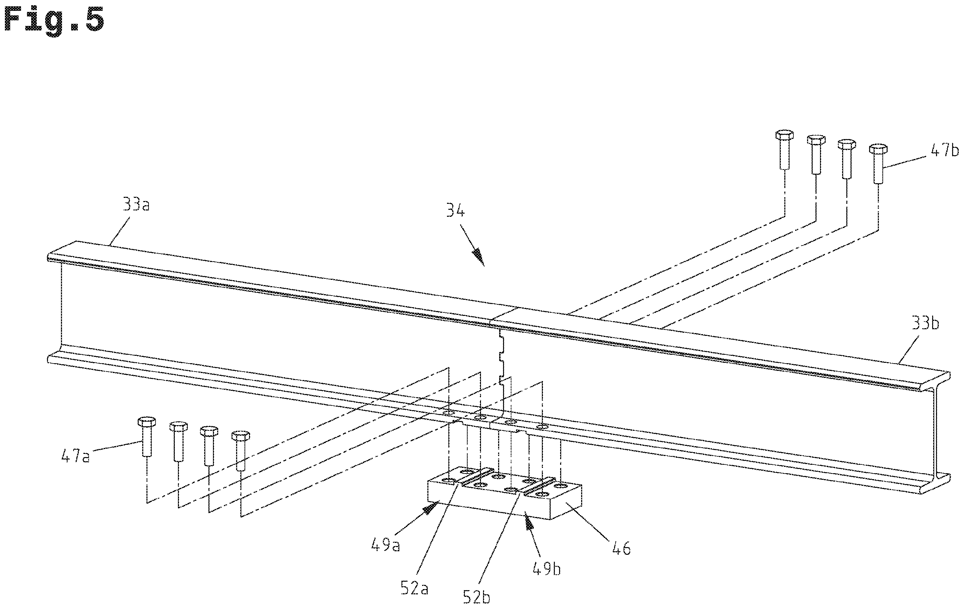

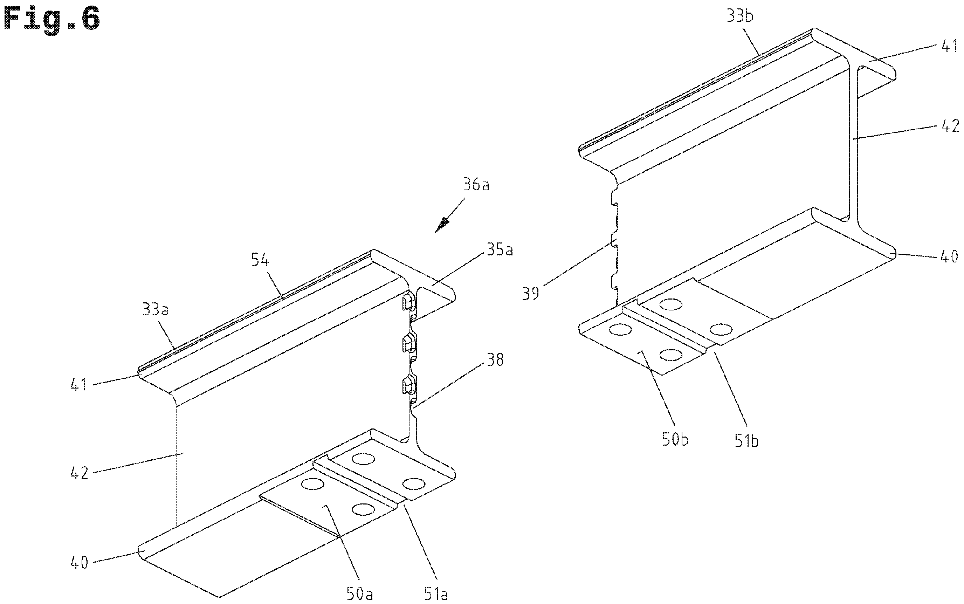

Die Positionieröffnungen 38 erstrecken sich jeweils mit einer Tiefe parallel zu einer Längsachse der ersten Fahrschiene 33a und sind abwechselnd in entgegengesetzter Richtung orientiert und zueinander versetzt angeordnet und grenzen an die voneinander abgewandten dritten Führungsbahnen 27 an. Wie auch in den Fig. 5 und 6 zu erkennen, verbleiben zwischen den Positionieröffnungen 38 Materialstege, welche einen Teilabschnitt der dritten Führungsbahnen 27 bilden.

Die Positioniervorsprünge 39 erstrecken sich jeweils mit einer Länge parallel zu einer Längsachse der zweiten Fahrschiene 33b und sind abwechselnd in entgegengesetzter Richtung orientiert und zueinander versetzt angeordnet und grenzen an die voneinander abgewandten dritten Führungsbahnen 27 an. Wie auch in den Fig. 5 und 6 zu erkennen, bilden die Positioniervorsprünge 39 einen Teilabschnitt der dritten Führungsbahnen 27 aus.

Die Positionieröffnungen 38 weisen eine gegenüber der Breite des Vertikalsteges 42 geringere Breite auf. Die Positioniervorsprünge 39 weisen eine gegenüber der Breite des Vertikalsteges 42 geringere Breite auf.

Sind die Stirnenden 35a, 35b zueinander ausgerichtet, können die Positionieröffnungen 38 und Positioniervorsprünge 39 wechselweise ineinandergreifen, wie in Fig. 5 ersichtlich.

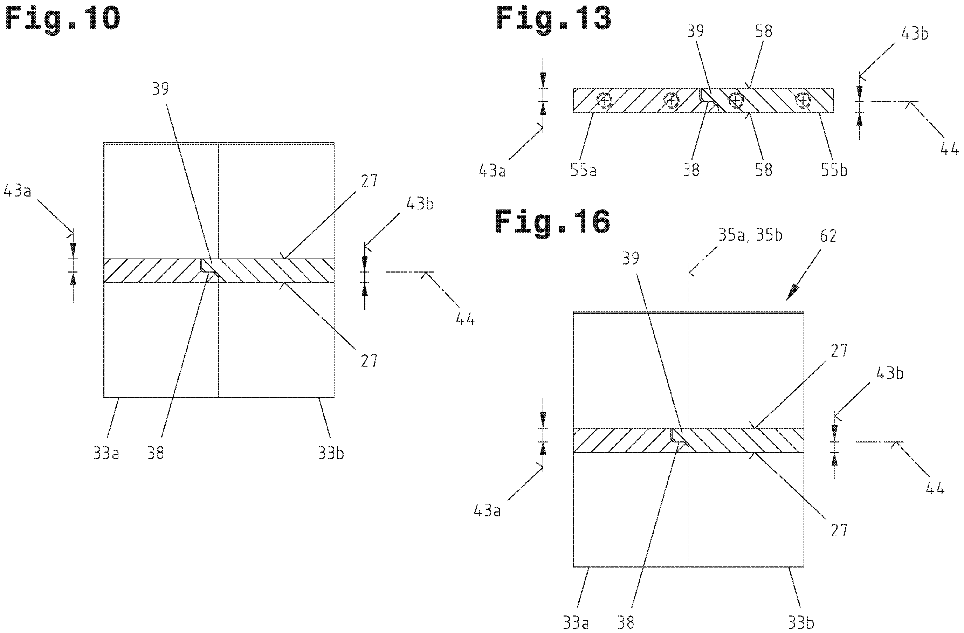

Wie in Fig. 10 zu erkennen, sind die Positioniervorsprünge 39 kürzer als die Positionieröffnungen 38 tief sind, sodass die Flächenabschnitte 37a, 37b stumpf aneinander angelegt werden können. Die Breite 43a der Positionieröffnungen 38 und die Breite 43b der Positioniervorsprünge 39 sind so aufeinander abgestimmt, dass diese bzw. einander zugewandte Anlageflächen in der Querschnittsebene senkrecht zur Längsachse 44 der Fahrschienen 33a, 33b im Wesentlichen spielfrei eingreifen und die einander gegenüberliegenden dritten Führungsbahnen 27 stoßfrei verlaufen, wenn die Fahrschienen 33a, 33b miteinander verbunden sind. Von Vorteil ist, dass das erste Formschlusselement 36a und zweite Formschlusselement 36b der Positionierung und Verbindung dienen.

Mit anderen Worten, sind die Fahrschienen 33a, 33b über die ineinandergreifenden Positionieröffnungen 38 und Positioniervorsprünge 39 und über die Flächenabschnitte 37a, 37b gegeneinander abgestützt, sodass die Fahrschienen 33a, 33b in Richtung der Längsachse 44 des Schienensystems 20a und in einer senkrechten Richtung auf eine Längsebene 45 des Schienensystems 20a zueinander positioniert sind. Die Längsebene 45 verläuft in Richtung der Längsachse 44 des Schienensystems 20a und parallel zur dritten Führungsbahn 27. Hingegen können sich die Fahrschienen 33a, 33b in einer Richtung senkrecht auf die ersten Führungsbahn 23 mit geringem Spiel gegeneinander bewegen.

Die Fahrschienen 33a, 33b können zusätzlich über eine Anordnung zum Fixieren einer Relativlage zwischen der ersten Fahrschiene 33a und zweiten Fahrschiene 33b miteinander verbunden werden. Nach gezeigter Ausführung (siehe Fig. 4 und 5) weist die Verbindungsvorrichtung 34 bzw. Anordnung einen Verbindungsträger 46 auf, welcher über ein erstes Fixiermittel 47a mit einem Endbereich der ersten Fahrschiene 33a und über ein zweites Fixiermittel 47b mit einem Endbereich der zweiten Fahrschiene 33b verbunden ist. Damit wird eine Relativbewegung zwischen den Fahrschienen 33a, 33b verhindert. Die Fahrschienen 33a, 33b können über den Verbindungsträger 46 in einer Richtung senkrecht auf die ersten Führungsbahn 23 gegeneinander positionieren werden.

Nach gezeigter Ausführung ist die erste Fahrschiene 33a am Untergurt 40 nahe dem Stirnende 35a mit einem ersten Formschlusselement 48a und die zweite Fahrschiene 33b am Untergurt 40 nahe dem Stirnende 33b mit einem zweiten Formschlusselement 48b versehen. Ebenso ist der Verbindungsträger 46 mit einem ersten Formschlusselement 49a und einem zweiten Formschlusselement 49b versehen, wobei jeweils die ersten Formschlusselemente 48a, 49a und jeweils die zweiten Formschlusselemente 48b, 49b komplementär ineinandergreifen.

Das erste Formschlusselement 48a umfasst beispielweise eine an der ersten Fahrschiene 33a in einer Montagefläche 50a vertieft angeordnete Positionieraufnahme 51a. Das Formschlusselement 49a umfasst beispielweise einen am Verbindungsträger 46 an einer Basisplatte 53 senkrecht vorragenden ersten Positioniervorsprung 52a.

Das zweite Formschlusselement 48b umfasst beispielweise eine an der zweiten Fahrschiene 33b in einer Montagefläche 50b vertieft angeordnete Positionieraufnahme 51b. Das Formschlusselement 49b umfasst beispielweise einen am Verbindungsträger 46 an einer Basisplatte 53 senkrecht vorragenden zweiten Positioniervorsprung 52b.

Sind die Stirnenden 35a, 35b zueinander ausgerichtet und ist der Verbindungsträger 46 mit der Basisplatte 53 gegen die Montageflächen 50a, 50b angelegt, greifen jeweils die ersten Formschlusselemente 48a, 49a und jeweils die zweiten Formschlusselemente 48b, 49b komplementär ineinander. Die Fahrschienen 33a, 33b sind über den Verbindungsträger 46 gekoppelt und über die Fixiermittel 47a, 47b miteinander fixiert.

Die Positionieraufnahmen 51a, 51b und Positioniervorsprünge 52a, 52b sind in einem Längsabstand voneinander positioniert, wobei der Längsabstand so bemessen ist, dass die Flächenabschnitte 37a, 37b stumpf aneinander anliegen.

Es sei an dieser Stelle auch hingewiesen, dass die ersten Formschlusselemente 48a, 49a und die zweiten Formschlusselement 48b, 49b nicht zwingender Weise notwendig sind. Es können stattdessen auch nur die Fixiermittel 47a, 47b, beispielweise Spannschrauben, vorgesehen werden. In diesem Fall weist der Verbindungsträger 46 nur die Basisplatte 53 auf.

Von Vorteil ist, dass die erste Fahrschiene 33a und zweite Fahrschiene 33b über die Verbindungsvorrichtung 34 lösbar miteinander verbunden werden können. Die Verbindungsvorrichtung 34 ist einfach aufgebaut und kann die Schienenstoßverbindung auf der Baustelle rasch hergestellt werden. Montagefehler können nahezu vollständig ausgeschlossen werden. Auch kann eine umfangreiche Qualitätsprüfung der Schienenstoßverbindung vermieden werden, wie dies bei herkömmlichen Schweißverbindungen erforderlich ist.

Wie aus dem Beschriebenen hervorgeht, ist die Anordnung zum Fixieren einer Relativlage zwischen der ersten Fahrschiene 33a und zweiten Fahrschiene 33b durch den Verbindungsträger 46 und die Fixiermittel 47a, 47b oder den Verbindungsträger 46, die Formschlusselemente 48a, 49a, 48b, 49b und die Fixiermittel 47a, 47b gebildet.

In den gemeinsam beschriebenen Fig. 11 bis 13 ist eine zweite Ausführung des Schienensystems, insbesondere das obere Schienensystem 20b näher gezeigt, welches eine ähnlich aufgebaute Verbindungsvorrichtung 56 verwendet.

Das obere Schienensystem 20b umfasst eine erste Fahrschiene 55a, eine zweite Fahrschiene 55b und eine Verbindungsvorrichtung 56. Die erste Fahrschiene 55a und zweite Fahrschiene 55b bilden zumindest eine Führungsbahn aus, welche in Längsrichtung des Schienensystems 20b verläuft und entlang welcher ein oder mehrere Laufräder 30a, 30b des Förderfahrzeuges 4 abrollbar anliegen. Nach gezeigter Ausführung sind die Fahrschienen 55a, 55b jeweils durch ein Flachprofil 57 gebildet, das einander gegenüberliegende Führungsbahnen 58 aufweist.

Wie in den Fig. ersichtlich, verläuft der erste Flächenabschnitt 37a in einer Querschnittsebene senkrecht zur ersten Fahrschiene 55a und verläuft der zweite Flächenabschnitt 37b in einer Querschnittsebene senkrecht zur zweiten Fahrschiene 55b. Der erste Flächenabschnitt 37a und der zweite Flächenabschnitt 37b grenzen jeweils an die zumindest eine Führungsbahn an.

Die Verbindungsvorrichtung 56 weist zumindest eine Formschlussverbindung zwischen den aufeinander zugerichteten Stirnenden 59a, 59b der erste Fahrschiene 55a und zweite Fahrschiene 55b auf. Die erste Fahrschiene 55a bildet an ihrem Stirnende 59a ein erstes Formschlusselement 36a und einen ersten Flächenabschnitt 37a aus. Das Stirnende 59a verläuft in einer Querschnittsebene senkrecht zur Längserstreckung der ersten Fahrschiene 55a. Die zweite Fahrschiene 55b bildet an ihrem Stirnende 59b ein zweites Formschlusselement 36b und einen zweiten Flächenabschnitt 37b aus. Das Stirnende 59b verläuft in einer Querschnittsebene senkrecht zur Längserstreckung der ersten Fahrschiene 55b. Das erste Formschlusselement 36a und zweite Formschlusselement 36b sind derart ausgebildet und angeordnet, dass diese komplementär ineinandergreifen und die Stirnenden 55a, 55b der ersten Fahrschiene 55a und zweiten Fahrschiene 55b mit den Flächenabschnitten 37a, 37b stumpf aneinander anliegen. Es entsteht ein im Wesentlichen spaltfreier Übergang an der zumindest einen Führungsbahn, insbesondere zumindest in Flächenabschnitten der Führungsbahn(en) 58 zwischen der ersten Fahrschiene 55a und zweiten Fahrschiene 55b. Das erste Formschlusselement 36a ist durch zumindest eine in dem Stirnende 59a vertieft angeordnete Positionieröffnung 38 gebildet. Das zweite Formschlusselement 36b ist durch zumindest einen an dem Stirnende 59b senkrecht vorragenden Positioniervorsprung 39 gebildet.

Das erste Formschlusselement 36a kann mehr als eine in dem Stirnende 59a vertieft angeordnete Positionieröffnung 38, beispielweise sechs Positionieröffnungen 38 umfassen. Das zweite Formschlusselement 36b kann mehr als einen an dem Stirnende 59b senkrecht vorragenden Positioniervorsprung 39, beispielweise sechs Positioniervorsprünge 39 umfassen.

Wie aus den Fig. ersichtlich, grenzt der erste Flächenabschnitt 37a an das erste Formschlusselement 36a, insbesondere die Positionieröffnungen 38 an und erstreckt sich bis zu den Rändern des Flachprofils 57. Der zweite Flächenabschnitt 37b grenzt an das zweite Formschlusselement 36b, insbesondere die Positioniervorsprünge 39 an und erstreckt sich bis zu den Rändern des Flachprofils 57.

Die Positionieröffnungen 38 erstrecken sich jeweils mit einer Tiefe parallel zu einer Längsachse der ersten Fahrschiene 55a und sind abwechselnd in entgegengesetzter Richtung orientiert und zueinander versetzt angeordnet und grenzen an die voneinander abgewandten Führungsbahnen 58 an. Wie auch in Fig. 11 zu erkennen, verbleiben zwischen den Positionieröffnungen 38 Materialstege, welche einen Teilabschnitt der Führungsbahnen 58 bilden.

Die Positioniervorsprünge 39 erstrecken sich jeweils mit einer Länge parallel zu einer Längsachse der zweiten Fahrschiene 55b und sind abwechselnd in entgegengesetzter Richtung orientiert und zueinander versetzt angeordnet und grenzen an die voneinander abgewandten Führungsbahnen 58 an. Wie auch in den Fig. 11 und 13 zu erkennen, bilden die Positioniervorsprünge 39 einen Teilabschnitt der Führungsbahnen 58 aus.

Die Positionieröffnungen 38 weisen eine gegenüber der Breite des Flachprofils 57 geringere Breite auf. Die Positioniervorsprünge 39 weisen eine gegenüber der Breite des Flachprofils 57 geringere Breite auf.

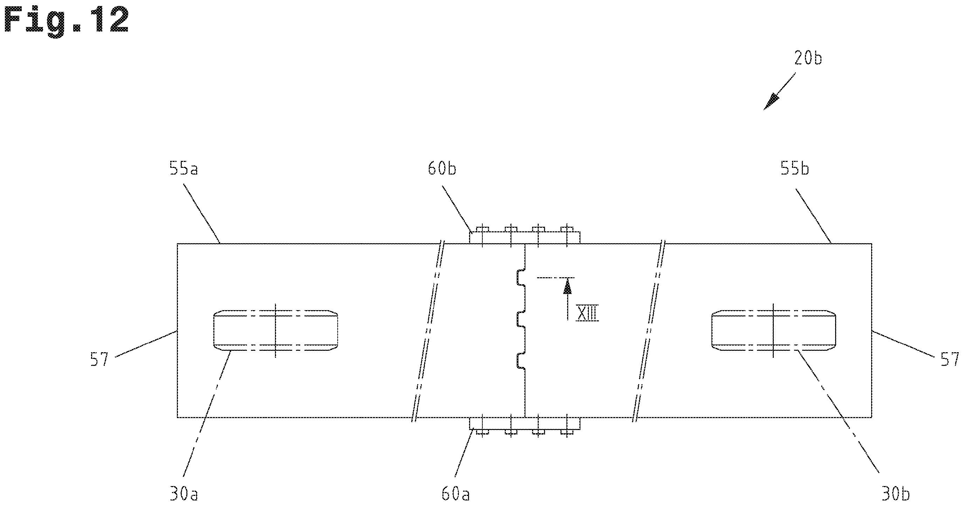

Sind die Stirnenden 35a, 35b zueinander ausgerichtet, können die Positionieröffnungen 38 und Positioniervorsprünge 39 wechselweise ineinandergreifen, wie in Fig. 12 ersichtlich. Wie auch zu erkennen, sind die Positioniervorsprünge 39 kürzer als die Positionieröffnungen 38 tief sind, sodass die Flächenabschnitte 37a, 37b stumpf aneinander angelegt werden können. Die Breite 43a der Positionieröffnungen 38 und die Breite 43b der Positioniervorsprünge 39 sind so aufeinander abgestimmt, dass diese bzw. einander zugewandte Anlageflächen in der Querschnittsebene senkrecht zur Längsachse der Fahrschienen 55a, 55b im Wesentlichen spielfrei eingreifen und die einander gegenüberliegenden Führungsbahnen 58 stoßfrei verlaufen, wenn die Fahrschienen 55a, 55b miteinander verbunden sind (siehe Fig. 13). Von Vorteil ist, dass das erste Formschlusselement 36a und zweite Formschlusselement 36b der Positionierung und Verbindung dienen.

Mit anderen Worten, sind die Fahrschienen 33a, 33b über die ineinandergreifenden Positionieröffnungen 38 und Positioniervorsprünge 39 und über die Flächenabschnitte 37a, 37b gegeneinander abgestützt, sodass die Fahrschienen 55a, 55 in Richtung der Längsachse 44 des Schienensystems 20b und in einer senkrechten Richtung auf eine Längsebene 45 (nicht eingetragen) des Schienensystems 20b zueinander positioniert sind. Die Längsebene verläuft in Richtung der Längsachse 44 des Schienensystems 20b und parallel zu den Führungsbahnen 58. Hingegen können sich die Fahrschienen 55a, 55b in einer Richtung parallel zu den Führungsbahnen 58 mit geringem Spiel gegeneinander bewegen.

Die Fahrschienen 55a, 55b können zusätzlich über eine Anordnung zum Fixieren einer Relativlage zwischen der ersten Fahrschiene 55a und zweiten Fahrschiene 55b miteinander verbunden werden.

Nach gezeigter Ausführung weist die Verbindungsvorrichtung 56 bzw. die Anordnung einen unteren Verbindungsträger 60a und oberen Verbindungsträger 60b auf, welche jeweils über ein erstes Fixiermittel 47a mit einem Endbereich der ersten Fahrschiene 55a und über ein zweites Fixiermittel 47b mit einem Endbereich der zweiten Fahrschiene 55b verbunden ist. Die Fixiermittel 47a, 47b sind beispielweise Schrauben oder eine Kombination von Passstiften und Schrauben. Damit wird eine Relativbewegung zwischen den Fahrschienen 55a, 55b verhindert. Die Fahrschienen 55a, 55b können über die Verbindungsträger 60a, 60b in einer Richtung parallel zu den Führungsbahnen 58 gegeneinander positioniert werden.

Sind die Stirnenden 59a, 59b zueinander ausgerichtet und sind die Verbindungsträger 60a, 60b gegen die einander gegenüberliegenden Montageflächen 61a, 61b angelegt, greifen die ersten Formschlusselemente 36a, 36b komplementär ineinander. Die Fahrschienen 55a, 55b sind über die Verbindungsträger 60a, 60b gekoppelt und über die Fixiermittel 47a, 47b miteinander fixiert.

Es sei an dieser Stelle auch hingewiesen, dass der obere Verbindungsträger 60b nicht zwingender Weise notwendig sind. Von Vorteil ist, dass die erste Fahrschiene 55a und zweite Fahrschiene 55b über die Verbindungsvorrichtung 56 lösbar miteinander verbunden werden können.

Wie aus dem Beschriebenen hervorgeht, ist die Anordnung zum Fixieren einer Relativlage zwischen der ersten Fahrschiene 55a und zweiten Fahrschiene 55b durch den Verbindungsträger 60a und die Fixiermittel 47a, 47b oder die Verbindungsträger 60a, 60b und die Fixiermittel 47a, 47b gebildet.

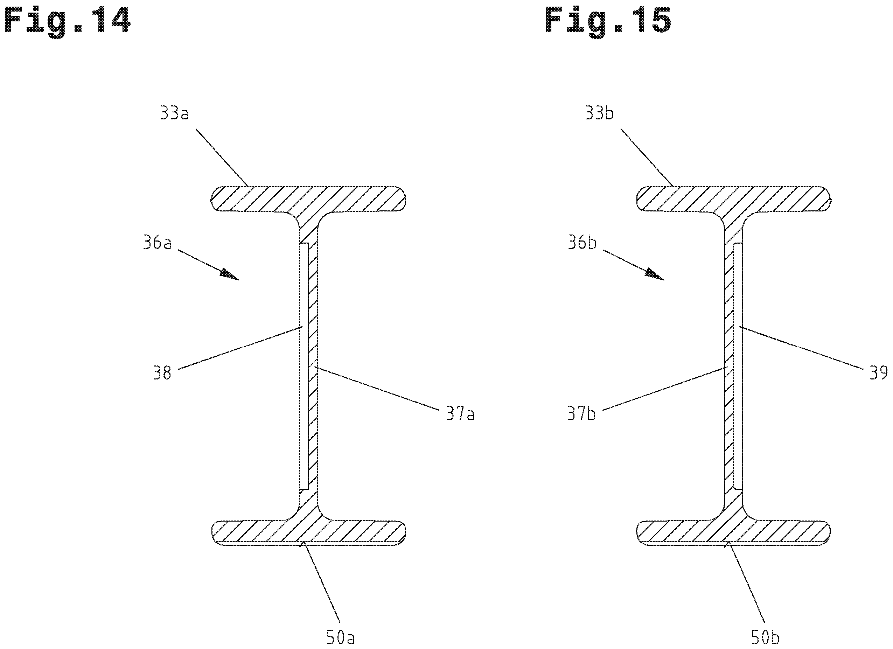

In den Fig. 14 bis 16 ist eine Verbindungsvorrichtung 62 gezeigt, welche eine Formschlussverbindung zwischen den aufeinander zugerichteten Stirnenden 35a, 35b der ersten Fahrschiene 33a und zweiten Fahrschiene 33b umfasst. Die erste Fahrschiene 33a bildet an ihrem Stirnende 35a ein erstes Formschlusselement 36a und einen ersten Flächenabschnitt 37a aus. Das Stirnende 35a verläuft in einer Querschnittsebene senkrecht zur Längserstreckung der ersten Fahrschiene 33a. Die zweite Fahrschiene 33b bildet an ihrem Stimende 35b ein zweites Formschlusselement 36b und einen zweiten Flächenabschnitt 37b aus. Das Stirnende 35b verläuft in einer Querschnittsebene senkrecht zur Längserstreckung der ersten Fahrschiene 33b. Das erste Formschlusselement 36a und zweite Formschlusselement 36b sind derart ausgebildet und angeordnet, dass diese komplementär ineinandergreifen und die Stirnenden 35a, 35b der ersten Fahrschiene 33a und zweiten Fahrschiene 33b mit den Flächenabschnitten 37a, 37b stumpf aneinander anliegen. Im Unterschied zu der Ausführung gemäß den Fig. 3 bis 10 ist das erste Formschlusselement 36a durch eine (einzige) in dem Stirnende 35a vertieft angeordnete Positionieröffnung 38 gebildet. Das zweite Formschlusselement 36b ist durch einen (einzigen) an dem Stirnende 35b senkrecht vorragenden Positioniervorsprung 39 gebildet.

Wie aus den Fig. ersichtlich, ist das erste Formschlusselement 36a am Vertikalsteg 42 der ersten Fahrschiene 33a und das zweite Formschlusselement 36b am Vertikalsteg 42 der zweiten Fahrschiene 33b ausgebildet. Der erste Flächenabschnitt 37a grenzt an das erste Formschlusselement 36a, insbesondere die Positionieröffnung 38 an und erstreckt sich bis in den Untergurt 40 und Obergurt 41. Der zweite Flächenabschnitt 37b grenzt an das zweite Formschlusselement 36b, insbesondere den Positioniervorsprung 39 an und erstreckt sich bis in den Untergurt 40 und Obergurt 41. In einer möglichen Ausführung ist am Untergurt 40 und Obergurt 41 das erste Formschlusselement 36a / zweite Formschlusselement 36b nicht vorgesehen.

Die Positionieröffnung 38 erstreckt sich mit einer Tiefe parallel zu einer Längsachse der ersten Fahrschiene 33a und grenzt an die voneinander abgewandten dritten Führungsbahnen 27 an. Der Positioniervorsprung 39 erstreckt sich mit einer Länge parallel zu einer Längsachse der zweiten Fahrschiene 33b und grenzt an eine der voneinander abgewandten dritten Führungsbahnen 27 an. Der Positioniervorsprung 39 bildet einen Teilabschnitt der dritten Führungsbahn 27 aus. Die Positionieröffnung 38 weist eine gegenüber der Breite des Vertikalsteges 42 geringere Breite auf. Der Positioniervorsprung 39 weist eine gegenüber der Breite des Vertikalsteges 42 geringere Breite auf.

Sind die Stirnenden 35a, 35b zueinander ausgerichtet, können die Positionieröffnung 38 und der Positioniervorsprung 39 ineinandergreifen, wie in Fig. 16 ersichtlich. Wie auch zu erkennen, ist der Positioniervorsprung 39 kürzer als die Positionieröffnung 38 tief ist, sodass die Flächenabschnitte 37a, 37b stumpf aneinander angelegt werden können. Die Breite 43a der Positionieröffnung 38 und die Breite 43b des Positioniervorsprunges 39 sind so aufeinander abgestimmt, dass diese bzw. einander zugewandte Anlageflächen in der Querschnittsebene senkrecht zur Längsachse 44 der Fahrschienen 33a, 33b im Wesentlichen spielfrei eingreifen und die einander gegenüberliegenden dritten Führungsbahnen 27 stoßfrei verlaufen, wenn die Fahrschienen 33a, 33b miteinander verbunden sind (siehe Fig. 16). Von Vorteil ist, dass das erste Formschlusselement 36a und zweite Formschlusselement 36b der Positionierung und Verbindung dienen.

Die Fahrschienen 33a, 33b können zusätzlich über eine Anordnung zum Fixieren einer Relativlage zwischen der ersten Fahrschiene 33a und zweiten Fahrschiene 33b miteinander verbunden werden. Nach gezeigter Ausführung weist die Verbindungsvorrichtung 62 den oben beschriebenen Verbindungsträger 46 auf, wie in diesen Fig. nicht dargestellt. Die Fahrschienen 33a, 33b können über den Verbindungsträger 46 in einer Richtung senkrecht auf die ersten Führungsbahn 23 gegeneinander positionieren werden.

Die beschriebene Ausführung der Verbindungsvorrichtung 62 kann natürlich auch am Schienensystems 20b verwendet werden.

In Fig. 3 ist ein Ausschnitt des Schienensystems 20a und einige der über die Schienenlänge verteilt angeordneten Befestigungsvorrichtungen 63 gezeigt. Das Schienensystem 20a wird über die Befestigungsvorrichtungen 63 auf an einem (ausschließlich in Fig. 17 dargestellten) Anschlussbauteil, beispielweise einem Boden verankerte Schienenstützplatten 64 montiert. Die Schienenstützplatte 64 ist am Anschlussbauteil bespielweise über (ausschließlich in Fig. 17 eingetragene) Klebeanker 74 verankert.

Die Befestigungsvorrichtung 63, wie sie in Fig. 17 näher dargestellt ist, umfasst eine unterhalb vom Schienensystem 20a angeordnete und zu beiden Seiten des Schienensystems 20a mit Montageabschnitten 65 vorragende Trägerplatte 66 und eine Klemmeinheit zum Montieren des Schienensystems 20a an der Trägerplatte 66.

Die Trägerplatte 66 ist vorzugsweise zwischen den Montageabschnitten 65 mit parallel zur Längsrichtung des Schienensystems 20a mit gegenseitigem Abstand verlaufenden Auflagen 75 versehen, die jeweils eine Auflagefläche ausbilden, an welchen sich das Schienensystem 20a abstützt.

Die Klemmeinheit weist zu beiden Seiten des Schienensystems 20a angeordnete Klemmplatten 67 und je Klemmplatte 67 ein Spannmittel 68 auf. Die Klemmplatten 67 umfassen jeweils einen mit einer Anpresskraft gegen den Untergurt 40 anliegenden Spannabschnitt 69 und einen an der Trägerplatte 66 in dem Montageabschnitt 65 aufliegenden Stützabschnitt 70 und eine Durchgangsöffnung 71 zur Aufnahme des Spannmittels 68. Die Spannmittel 68 sind an den Montageabschnitten 65 verankert.

Es erweist sich auch von Vorteil, wenn zwischen den Auflageflächen an dem Spannabschnitt 69 und an dem Untergurt 40 und/oder zwischen den Auflageflächen an den Auflagen 75 und an dem Untergurt 40 zusätzlich ein Gleitmittel (nicht dargestellt) vorgesehen ist. Das Gleitmittel ist beispielweise aus einer Gleitschicht gebildet. Vorzugsweise wird als Gleitmittel (Schmiermittel) eine Gleitpaste verwendet. Es können durch unterschiedliche Längendehnungscharakteristiken zwischen dem Anschlussbauteil, beispielweise Boden, und dem Schienensystem 20a hervorgerufenen Belastungen auf die Befestigungsvorrichtung 63 günstig beeinflusst werden. Insbesondere kann über eine lange Einsatzdauer eine reproduzierbare Reibschlussverbindung zwischen dem Spannabschnitt 69 und Untergurt 40 bzw. zwischen den Auflagen 75 und dem Untergurt 40 geschaffen werden.

Mittels der Höhenverstellvorrichtung 72, beispielweise Distanzschrauben, kann das Schienensystem 20a höheneingestellt werden, sodass auch bei großen Schienenlängen eine exakte Höheneinstellung unabhängig von Bodenunebenheiten möglich ist.

Wie in Fig. 17 ersichtlich, erweist es sich auch von Vorteil, wenn die Schienenstützplatte 64 an ihrer dem Anschlussbauteil zugewandten Innenseite Auflagevorsprünge 73 aufweist, welche gegen den Anschlussbauteil abgestützt sind.

Abschließend sei auch noch erwähnt, dass die Fahrschienen 33a, 33b; 55a, 55b vorzugsweise im Umformverfahren, insbesondere Walzen oder Strangpressen und durch Ablängen auf eine Normlänge (beispielweise sechs Meter) hergestellt sind. Es erweist sich als günstig, wenn das Fahrschienenprofil während des Umformprozesses mit einer Markierung 54 (Fig. 6) versehen wird, sodass nach dem Ablängen des Fahrschienenprofils auf mehrere Stücke einzelne Fahrschienen 33a, 33b; 55a, 55b eine unverwechselbare Ausrichtung der (spiegelsymmetrisch gestalteten) Fahrschienen 33a, 33b; 55a, 55b möglich ist.

Auch sei erwähnt, dass es grundsätzlich möglich ist, dass die Verbindungsvorrichtung 34; 56; 62 keinen Verbindungsträger 46; 60a; 60b aufweist und die Anordnung zum Fixieren einer Relativlage zwischen der ersten Fahrschiene 33a und zweiten Fahrschiene 33b durch die Befestigungsvorrichtungen 63 gebildet ist. Dabei ist die erste Fahrschiene 33a; 55a nahe dem Stirnende 35a; 59a mit zumindest einer ersten Befestigungsvorrichtung 63 und die zweite Fahrschienen 33a; 55b nahe dem Stirnende 35b; 59b mit zumindest einer zweiten Befestigungsvorrichtung 63 fixiert bzw. eingespannt. Die erste Fahrschiene 33a; 55a wird nahe dem Stirnende 35a; 59a über die oben beschriebenen Klemmplatten 67 mit einer Anpresskraft gegen eine erste Trägerplatte 66 gespannt und die zweite Fahrschiene 33a; 55a wird nahe dem Stirnende 35b; 59b über die oben beschriebenen Klemmplatten 67 mit einer Anpresskraft gegen eine zweite Trägerplatte 66 gespannt. Die Vorspannkraft ist dabei so ausgelegt, dass sich auch bei dynamischen Fahrbewegungen des Förderfahrzeuges 4 die Stirnenden 35a, 35b; 59a, 59b in Längsrichtung des Schienensystems 20a; 20b nicht auseinander bewegen und stumpf gegeneinander anliegen.

Der Ordnung halber sei abschließend darauf hingewiesen, dass zum besseren Verständnis des Aufbaus des Schienensystems 20a; 20b dieses beziehungsweise dessen Bestandteile teilweise unmaßstäblich und/oder vergrößert und/oder verkleinert dargestellt wurden.

**Bezugszeichenaufstellung**

| | | | |
|---|---|---|---|
| 1 | Lagersystem | 39 | Positioniervorsprung |
| 2 | Lagerregal | 40 | Untergurt |
| 3 | Regalgasse | | |
| 4 | Förderfahrzeug | 41 | Obergurt |
| 5 | Stückgut | 42 | Vertikalsteg |
| | | 43 | Breite |
| 6 | Lagerplatz | 44 | Längsachse |
| 7 | Fördervorrichtung | 45 | Längsebene |
| 8 | Fördervorrichtung | | |
| 9 | Regalsteher | 46 | Verbindungsträger |
| 10 | Regalsteher | 47 | Fixiermittel |
| | | 48 | Formschlusselement |
| 11 | Längstraverse | 49 | Formschlusselement |
| 12 | Längstraverse | 50 | Montagefläche |
| 13 | Querträger | | |
| 14 | Lagerebene | 51 | Positionieraufnahme |
| 15 | Mast | 52 | Positioniervorsprung |
| | | 53 | Basisplatte |
| 16 | Fahrwerk | 54 | Markierung |
| 17 | Aufnahmeplattform | 55 | Fahrschiene |
| 18 | Hubantrieb | | |
| 19 | Fahrantrieb | 56 | Verbindungsvorrichtung |
| 20 | Schienensystem | 57 | Flachprofil |
| | | 58 | Führungsbahn |
| 21 | Fahrrahmen | 59 | Stirnende |
| 22 | Antriebsrad | 60 | Verbindungsträger |
| 23 | Führungsbahn | | |
| 24 | Laufrad | 61 | Montagefläche |
| 25 | Führungsbahn | 62 | Verbindungsvorrichtung |
| | | 63 | Befestigungsvorrichtung |
| 26 | Laufrad | 64 | Schienenstützplatte |
| 27 | Führungsbahn | 65 | Montageabschnitt |
| 28 | Laufrad | | |
| 29 | Fahrrahmen | 66 | Trägerplatte |
| 30 | Laufrad | 67 | Klemmplatte |
| | | 68 | Spannmittel |
| 31 | Transportvorrichtung | 69 | Spannabschnitt |
| 32 | Teleskopiereinheit | 70 | Stützabschnitt |
| 33 | Fahrschiene | | |
| 34 | Verbindungsvorrichtung | 71 | Durchgangsöffnung |
| 35 | Stirnende | 72 | Höhenverstellvorrichtung |
| | | 73 | Auflagevorsprung |
| 36 | Formschlusselement | 74 | Klebeanker |
| 37 | Flächenabschnitt | 75 | Auflage |
| 38 | Positionieröffnung | | |

## Patentansprüche

1. Schienensystem (20a; 20b) für ein entlang diesem verfahrbares Förderfahrzeug (4) zum Einlagern von Stückgütern (5) in ein Lagerregal (2) bzw. Auslagern von Stückgütern (5) aus einem Lagerregal (2), umfassend
eine erste Fahrschiene (33a; 55a),
eine zweite Fahrschiene (33b; 55b),
mehrere Führungsbahnen (23, 25, 27; 58) entlang der ersten Fahrschiene (33a; 55a) und zweiten Fahrschiene (33b; 55b), an welchen Laufräder (22, 24a, 24b, 26a, 26b, 28; 30a, 30b) eines Fahrwerkes (16a; 16b) des Förderfahrzeuges (4) abrollbar anlegbar sind,
eine Verbindungsvorrichtung (34; 56), welche eine Formschlussverbindung zwischen den aufeinander zugerichteten Stirnenden (35a, 35b; 59a, 59b) der ersten Fahrschiene (33a; 55a) und zweiten Fahrschiene (33b; 55b) umfasst, wobei
die erste Fahrschiene (33a; 55a) an ihrem Stirnende (35a; 59a) ein erstes Formschlusselement (36a) und einen ersten Flächenabschnitt (37a) ausbildet,
die zweite Fahrschiene (33b; 55b) an ihrem Stirnende (35b; 59b) ein zweites Formschlusselement (36b) und einen zweiten Flächenabschnitt (37b) ausbildet,
das erste Formschlusselement (36a) und zweite Formschlusselement (36b) komplementär ineinandergreifen,
das erste Formschlusselement (36a) einstückig am Stirnende (35a; 59a) der ersten Fahrschiene (33a; 55a) gebildet ist,
das zweite Formschlusselement (36b) einstückig am Stirnende (35b; 59b) der zweiten Fahrschiene (33b; 55b) gebildet ist,
der erste Flächenabschnitt (37a) in einer Querschnittsebene senkrecht zur ersten Fahrschiene (33a; 55a) verläuft und der zweite Flächenabschnitt (37b) in einer Querschnittsebene senkrecht zur zweiten Fahrschiene (33b; 55b) verläuft, und der erste Flächenabschnitt (37a) und der zweite Flächenabschnitt (37b) an die Führungsbahnen (23, 25, 27; 58) angrenzen,
die Stirnenden (35a, 35b; 59a, 59b) der ersten Fahrschiene (33a; 55a) und zweiten Fahrschiene (33b; 55b) mit den Flächenabschnitten (37a, 37b) stumpf aneinander anliegen, sodass ein nahezu spaltfreier Übergang an den Führungsbahnen (23, 25, 27; 58) zwischen der ersten Fahrschiene (33a; 55a) und zweiten Fahrschiene (33b; 55b) entsteht,
**dadurch gekennzeichnet, dass**
die erste Fahrschiene (33a) und die zweite Fahrschiene (33b) jeweils einen Untergurt (40), einen Obergurt (41) und einen diese verbindenden Vertikalsteg (42) ausbilden, wobei der Vertikalsteg (42) mit einander gegenüberliegenden Führungsbahnen (27) versehen ist, oder
die erste Fahrschiene (55a) und die zweite Fahrschiene (55b) jeweils durch ein Flachprofil (57) gebildet sind, das einander gegenüberliegende Führungsbahnen (58) aufweist, wobei
das erste Formschlusselement (36a) durch mehr als eine Positionieröffnung (38) und das zweite Formschlusselement (36b) durch mehr als einen Positioniervorsprung (39) gebildet sind, und
sich die Positionieröffnungen (38) jeweils mit einer Tiefe parallel zu einer Längsachse der ersten Fahrschiene (33a; 55a) erstrecken und abwechselnd in entgegengesetzter Richtung orientiert und zueinander versetzt angeordnet sind und an die voneinander abgewandten Führungsbahnen (27; 58) des Vertikalstegs (42) oder des Flachprofils (57) angrenzen, wobei zwischen den Positionieröffnungen (38) Materialstege verbleiben, welche einen Teilabschnitt der Führungsbahnen (27; 58) des Vertikalstegs (42) oder des Flachprofils (57) bilden, und
sich die Positioniervorsprünge (39) jeweils mit einer Länge parallel zu einer Längsachse der zweiten Fahrschiene (33b; 55b) erstrecken und abwechselnd in entgegengesetzter Richtung orientiert und zueinander versetzt angeordnet sind und an die voneinander abgewandten Führungsbahnen (27; 58) des Vertikalstegs (42) oder des Flachprofils (57) angrenzen, wobei die Positioniervorsprünge (39) einen Teilabschnitt der Führungsbahnen (27; 58) des Vertikalstegs (42) oder des Flachprofils (57) ausbilden.

2. Schienensystem nach Anspruch 1, **dadurch gekennzeichnet, dass** das erste Formschlusselement (36a) und das zweite Formschlusselement (36b) einander zugewandte Anlageflächen ausbilden und in senkrechter Richtung auf die Führungsbahnen (27; 58) mit den Anlageflächen gegeneinander abgestützt sind.

3. Schienensystem nach Anspruch 1 oder 2, **dadurch gekennzeichnet, dass** das erste Formschlusselement (36a) am Vertikalsteg (42) der ersten Fahrschiene (33a) und das zweite Formschlusselement (36b) am Vertikalsteg (42) der zweiten Fahrschiene (33b) ausgebildet sind.

4. Schienensystem nach einem der Ansprüche 1 bis 3, **dadurch gekennzeichnet, dass** der erste Flächenabschnitt (37a) am Untergurt (40) und/oder Obergurt (41) der ersten Fahrschiene (33a) ausgebildet ist.

5. Schienensystem nach einem der Ansprüche 1 bis 4, **dadurch gekennzeichnet, dass** der erste Flächenabschnitt (37a) am Vertikalsteg (42) ausgebildet ist und an das erste Formschlusselement (36a) angrenzt.

6. Schienensystem nach einem der Ansprüche 1 bis 5, **dadurch gekennzeichnet, dass** der zweite Flächenabschnitt (37b) am Untergurt (40) und/oder Obergurt (41) der zweiten Fahrschiene (33b) ausgebildet ist.

7. Schienensystem nach einem der Ansprüche 1 bis 6, **dadurch gekennzeichnet, dass** der zweite Flächenabschnitt (37b) am Vertikalsteg (42) ausgebildet ist und an das zweite Formschlusselement (36b) angrenzt.

8. Schienensystem nach Anspruch 1, **dadurch gekennzeichnet, dass** die Verbindungsvorrichtung (34; 56) eine Anordnung zum Fixieren einer Relativlage zwischen der ersten Fahrschiene (33a; 55a) und zweiten Fahrschiene (33b; 55b) umfasst.

9. Schienensystem nach Anspruch 1 oder 8, **dadurch gekennzeichnet, dass** die Verbindungsvorrichtung (34; 56) bzw. die Anordnung zum Fixieren einer Relativlage zwischen der ersten Fahrschiene (33a; 55a) und zweiten Fahrschiene (33b; 55b) einen Verbindungsträger (46; 60a; 60b) umfasst, der über ein erstes Fixiermittel (47a) mit einem Endbereich der ersten Fahrschiene (33a; 55a) und über ein zweites Fixiermittel (47b) mit einem Endbereich der zweiten Fahrschiene (33b; 55b) verbunden ist.

10. Schienensystem nach Anspruch 9, **dadurch gekennzeichnet, dass** eine Formschlussverbindung zwischen dem Verbindungsträger (46) und der ersten Fahrschiene (33a) und eine Formschlussverbindung zwischen dem Verbindungsträger (46) und der zweiten Fahrschiene (33b) vorgesehen sind.

11. Schienensystem nach Anspruch 10, **dadurch gekennzeichnet, dass** die erste Fahrschiene (33a) am Untergurt (40) nahe dem Stirnende (35a) ein erstes Formschlusselement (48a) und die zweite Fahrschiene (33b) am Untergurt (40) nahe dem Stirnende (35b) ein zweites Formschlusselement (48b) ausbildet, und der Verbindungsträger (46) ein erstes Formschlusselement (49a) und ein zweites Formschlusselement (49b) aufweist, wobei einerseits das erste Formschlusselement (48a) am Untergurt (40) der ersten Fahrschiene (33a) und das erste Formschlusselement (49a) am Verbindungsträger (46) komplementär ineinandergreifen und andererseits das zweite Formschlusselement (48b) am Untergurt (40) der zweiten Fahrschiene (33b) und das zweite Formschlusselement (49b) am Verbindungsträger (46) komplementär ineinandergreifen.

12. Schienensystem nach Anspruch 1, **dadurch gekennzeichnet, dass** die Fahrschienen (33a, 33b; 55a, 55b) im Umformverfahren und durch Ablängen auf eine Normlänge hergestellt und mit einer Markierung (54) versehen sind.

13. Lagersystem (1) mit zumindest einem Lagerregal (2) und einem entlang dem Lagerregal (2) verlaufenden Schienensystem (20a; 20b) und einem Förderfahrzeug (4) zum Einlagern von Stückgütern (5) in das Lagerregal (2) bzw. Auslagern von Stückgütern (5) aus dem Lagerregal (2), wobei das Schienensystem (20a; 20b) eine erste Fahrschiene (33a; 55a) und eine zweite Fahrschiene (33b; 55b) umfasst und Führungsbahnen (23, 25, 27; 58) ausbildet, und wobei das Förderfahrzeug (4) ein Fahrwerk (16a; 16b) mit auf den Führungsbahnen (23, 25, 27; 58) abrollbar anliegenden Laufrädern (22, 24a, 24b, 26a, 26b, 28; 30a, 30b) und einen Fahrantrieb (19) zum Antrieb zumindest eines der Laufräder (22) aufweist, **dadurch gekennzeichnet, dass** das Schienensystem (20a; 20b) nach einem der Ansprüche 1 bis 12 ausgebildet ist.

14. Lagersystem nach Anspruch 13, **dadurch gekennzeichnet, dass** das Schienensystem (20a) über entlang der ersten Fahrschiene (33a) und zweiten Fahrschiene (33b) verteilt angeordnete Befestigungsvorrichtungen (63) auf Schienenstützplatten (64) gelagert ist, wobei die Schienenstützplatten (64) an einem Anschlussbauteil verankert sind, und wobei
die erste Fahrschiene (33a) und die zweite Fahrschiene (33b) jeweils den Untergurt (40), den Obergurt (41) und den diese verbindenden Vertikalsteg (42) ausbilden, und
die Befestigungsvorrichtungen (63) jeweils
eine unterhalb vom Schienensystem (20a) angeordnete und zu beiden Seiten des Schienensystems (20a) mit Montageabschnitten (65) vorragende Trägerplatte (66) aufweist, und
eine Klemmeinheit zum Montieren des Schienensystems (20a) an der Trägerplatte (66) aufweist, welche zu beiden Seiten des Schienensystems (20a) angeordnete Klemmplatten (67) und je Klemmplatte (67) ein Spannmittel (68) umfasst, wobei die Klemmplatten (67) jeweils einen mit einer Anpresskraft gegen den Untergurt (40) anliegenden Spannabschnitt (69) und einen an der Trägerplatte (66) in dem Montageabschnitt (65) aufliegenden Stützabschnitt (70) und eine Durchgangsöffnung (71) zur Aufnahme des Spannmittels (68) ausbilden, und die Spannmittel (68) an den Montageabschnitten (65) verankert sind.

15. Lagersystem nach Anspruch 14, **dadurch gekennzeichnet, dass** die Trägerplatte (66) an den Montageabschnitten (65) jeweils über eine Höhenverstellvorrichtung (72) an der Schienenstützplatte (64) montiert ist.

## Claims

1. A rail system (20a; 20b) for a conveyor vehicle (4) capable of traveling along the rail system (20a; 20b) for storage of piece goods (5) into a storage rack (2) or retrieval of piece goods (5) from a storage rack (2), comprising
a first running rail (33a; 55a),
a second running rail (33b; 55b),
multiple guide tracks (23; 25; 27; 58) along the first running rail (33a; 55a) and second running rail (33b; 55b), on which multiple guide tracks (23; 25; 27; 58) running wheels (22, 24a, 24b, 26a, 26b, 28; 30a, 30b) of a chassis (16a, 16b) of the conveyor vehicle (4) bear in rolling relationship,
a connecting device (34; 56), which comprises a positive locking connection between the ends (35a, 35b; 59a, 59b) of the first running rail (33a; 55a) and the second running rail (33b; 55b) that are directed towards one another, wherein
the first running rail (33a; 55a) forms a first interlocking element (36a) and a first surface portion (37a) at the end (35a; 59a) thereof,
the second running rail (33b; 55b) forms a second interlocking element (36b) and a second surface portion (37b) at the end (35b; 59b) thereof,
the first interlocking element (36a) and second interlocking element (36b) engage in one another in complementary manner,
the first interlocking element (36a) is formed in one piece at the end (35a; 59a) of the first running rail (33a; 55a),
the second interlocking element (36b) is formed in one piece at the end (35b; 59b) of the second running rail (33b; 55b),
the first surface portion (37a) extends in a cross-sectional plane perpendicular to the first running rail (33a; 55a) and the second surface portion (37b) extends in a cross-sectional plane perpendicular to the second running rail (33b; 55b), and the first surface portion (37a) and the second surface portion (37b) adjoin the guide tracks (23; 25; 27; 58),
and the ends (35a, 35b; 59a, 59b) of the first running rail (33a; 55a) and second running rail (33b; 55b) abut at the surface portions (37a, 37b) in a butt-jointed manner, so that an almost gap-free transition to the guide tracks (23; 25; 27; 58) is formed between the first running rail (33a; 55a) and second running rail (33b; 55b),
**characterized in that**
the first running rail (33a) and the second running rail (33b) each form a lower flange (40), an upper flange (41) and a vertical web (42) connecting these, wherein the vertical web (42) is provided with guide tracks (27) located opposite one another, or
the first running rail (55a) and the second running rail (55b) are each formed by a flat profile (57), which comprises guide tracks (58) located opposite one another, wherein
the first interlocking element (36a) is formed by more than one positioning opening (38) and the second interlocking element (36b) is formed by more than one positioning projection (39), and
the positioning openings (38) each extend with a depth in parallel to a longitudinal axis of the first running rail (33a; 55a) and are alternately oriented in opposite directions and arranged offset from one another and adjoin the guide tracks (27; 58) of the vertical web (42) or of the flat profile (57) facing away from one another, wherein material webs remain between the positioning openings (38), said material webs forming a partial section of the guide tracks (27; 58) of the vertical web (42) or of the flat profile (57), and
the positioning projections (39) each extend with a length in parallel to a longitudinal axis of the second running rail (33b; 55b) and are alternately oriented in opposite directions and arranged offset from one another and adjoin the guide tracks (27; 58) of the vertical web (42) or of the flat profile (57) facing away from one another, wherein the positioning projections (39) form a partial section of the guide tracks (27; 58) of the vertical web (42) or of the flat profile (57).

2. The rail system according to claim 1, **characterized in that** the first interlocking element (36a) and the second interlocking element (36b) form contact faces facing each other and in direction perpendicular to the guide tracks (27; 58) are braced with the contact faces against one another.

3. The rail system according to claim 1 or 2, **characterized in that** the first interlocking element (36a) is formed on the vertical web (42) of the first running rail (33a) and the second interlocking element (36b) is formed on the vertical web (42) of the second running rail (33b).

4. The rail system according to one of claims 1 to 3, **characterized in that** the first surface portion (37a) is formed on the lower flange (40) and/or upper flange (41) of the first running rail (33a).

5. The rail system according to one of claims 1 to 4, **characterized in that** the first surface portion (37a) is formed on the vertical web (42) and adjoins the first interlocking element (36a).

6. The rail system according to one of claims 1 to 5, **characterized in that** the second surface portion (37b) is formed on the lower flange (40) and/or upper flange (41) of the second running rail (33b).

7. The rail system according to one of claims 1 to 6, **characterized in that** the second surface portion (37b) is formed on the vertical web (42) and adjoins the second interlocking element (36b).

8. The rail system according to claim 1, **characterized in that** the connecting device (34; 56) comprises an arrangement for fixation of a relative location between the first running rail (33a; 55a) and second running rail (33b; 55b).

9. The rail system according to claim 1 or 8, **characterized in that** the connecting device (34; 56) and/or the arrangement for fixation of a relative location between the first running rail (33a; 55a) and second running rail (33b; 55b) comprises a connecting beam (46; 60a; 60b), which is connected via a first fixation means (47a) to an end region of the first running rail (33a; 55a) and via a second fixation means (47b) to an end region of the second running rail (33b; 55b).

10. The rail system according to claim 9, **characterized in that** a positive locking connection is provided between the connecting beam (46) and the first running rail (33a) and a positive locking connection is provided between the connecting beam (46) and the second running rail (33b).

11. The rail system according to claim 10, **characterized in that** the first running rail (33a) forms a first interlocking element (48a) on the lower flange (40) close to the end (35a) and the second running rail (33b) forms a second interlocking element (48b) on the lower flange (40) close to the end (35b), and the connecting beam (46) has a first interlocking element (49a) and a second interlocking element (49b), wherein, on the one hand, the first interlocking element (48a) on the lower flange (40) of the first running rail (33a) and the first interlocking element (49a) on the connecting beam (46) engage in one another in complementary manner, and, on the other hand, the second interlocking element (48b) on the lower flange (40) of the second running rail (33b) and the second interlocking element (49b) on the connecting beam (46) engage in one another in complementary manner.

12. The rail system according to claim 1, **characterized in that** the running rails (33a, 33b; 55a, 55b) are produced in the forming method and by cutting to a standard length, and are equipped with a marking (54).

13. A warehouse system (1) having at least one storage rack (2) and a rail system (20a; 20b) extending along the storage rack (2) and a conveyor vehicle (4) for storage of piece goods (5) in the storage rack (2) or retrieval of piece goods (5) from the storage rack (2), wherein the rail system (20a; 20b) comprises a first running rail (33a; 55a) and a second running rail (33b; 55b) and forms guide tracks (23; 25; 27; 58), and wherein the conveyor vehicle (4) has a chassis (16a; 16b) with running wheels (22, 24a, 24b, 26a, 26b, 28; 30a, 30b) bearing in rolling relationship on the guide tracks (23; 25; 27; 58) and a traveling unit (19) for the drive of at least one of the running wheels (22), **characterized in that** the rail system (20a; 20b) is designed according to one of claims 1 to 12.

14. The warehouse system according to claim 13, **characterized in that** the rail system (20a) is mounted on rail-bracing plates (64) via fastening devices (63) disposed in distributed manner along the first running rail (33a) and second running rail (33b), wherein the rail-bracing plates (64) are anchored on a connecting component, and wherein
the first running rail (33a) and second running rail (33b) each form the lower flange (40), the upper flange (41) and the vertical web (42) connecting these, and
the fastening device (63) each
have a carrier plate (66) disposed underneath the rail system (20a) and protruding with mounting portions (65) on both sides of the rail system (20a), and
for mounting of the rail system (20a) on the carrier plate (66), a clamping unit that comprises clamping plates (67) disposed on both sides of the rail system (20a) as well as one tightening means (68) per clamping plate (67), wherein the clamping plates (67) each form a tightening portion (69) bearing with a pressing force against the lower flange (40) and a bracing portion (70) lying on the carrier plate (66) in the mounting portion (65) and a through-opening (71) for accommodation of the tightening means (68), and the tightening means (68) are anchored on the mounting portions (65).

15. The warehouse system according to claim 14, **characterized in that** the carrier plate (66) on the mounting portions (65) is mounted on the rail-bracing plate (64) in each case via a height-adjusting device (72).

## Revendications

1. Système de rails (20a ; 20b) pour un véhicule de transport (4) mobile le long de celui-ci, pour le stockage de pièces (5) dans un rayonnage de stockage (2) respectivement le déstockage de pièces (5) hors d'un rayonnage de stockage (2), comprenant
un premier rail de roulement (33a ; 55a),
un deuxième rail de roulement (33b ; 55b),
plusieurs pistes de guidage (23, 25, 27 ; 58) le long du premier rail de roulement (33a ; 55a) et du deuxième rail de roulement (33b ; 55b), contre lesquelles des roues (22, 24a, 24b, 26a, 26b, 28 ; 30a, 30b) d'un train de roulement (16a ; 16b) du véhicule de transport (4) peuvent être appliquées de manière roulante,
un dispositif de liaison (34 ; 56) qui comprend une liaison par complémentarité de forme entre les extrémités frontales (35a, 35b ; 59a, 59b), orientées les unes vers les autres, du premier rail de roulement (33a ; 55a) et du deuxième rail de roulement (33b ; 55b), dans lequel
le premier rail de roulement (33a ; 55a) forme, au niveau de son extrémité frontale (35a ; 59a), un premier élément de complémentarité de forme (36a) et une première portion de surface (37a),
le deuxième rail de roulement (33b ; 55b) forme, au niveau de son extrémité frontale (35b ; 59b), un deuxième élément de complémentarité de forme (36b) et une deuxième portion de surface (37b),
le premier élément de complémentarité de forme (36a) et le deuxième élément de complémentarité de forme (36b) s'emboîtent l'un dans l'autre de manière complémentaire,
le premier élément de complémentarité de forme (36a) est formé d'une seule pièce au niveau de l'extrémité frontale (35a ; 59a) du premier rail de roulement (33a ; 55a),
le deuxième élément de complémentarité de forme (36b) est formé d'une seule pièce au niveau de l'extrémité frontale (35b ; 59b) du deuxième rail de roulement (33b ; 55b), la première portion de surface (37a) s'étend dans un plan de section transversale perpendiculaire au premier rail de roulement (33a ; 55a) et la deuxième portion de surface (37b) s'étend dans un plan de section transversale perpendiculaire au deuxième rail de roulement (33b ; 55b), et la première portion de surface (37a) et la deuxième portion de surface (37b) sont adjacentes au niveau des pistes de guidage (23, 25, 27 ; 58),
les extrémités frontales (35a, 35b ; 59a, 59b) du premier rail de roulement (33a ; 55a) et du deuxième rail de roulement (33b ; 55b) s'appuient l'une contre l'autre en aboutement, de façon à ce qu'une transition presque sans interstice en résulte au niveau des pistes de guidage (23, 25, 27 ; 58) entre le premier rail de roulement (33a ; 55a) et le deuxième rail de roulement (33b ; 55b),
**caractérisé en ce que**
le premier rail de roulement (33a) et le deuxième rail de roulement (33b) forment chacun une membrure inférieure (40), une membrure supérieure (41) et une nervure verticale (42) reliant celles-ci, dans lequel la nervure verticale (42) est munie de pistes de guidage (27) opposées entre elles ou
le premier rail de roulement (55a) et le deuxième rail de roulement (55b) sont constitués chacun d'un profilé plat (57) qui comprend des pistes de guidages (58) opposées entre elles, dans lequel
le premier élément de complémentarité de forme (36a) est constitué de plusieurs ouvertures de positionnement (38) et le deuxième élément de complémentarité de forme (36b) est constitué de plusieurs saillies de positionnement (39) et
les ouvertures de positionnement (38) s'étendent chacune avec une profondeur parallèle à un axe longitudinal du premier rail de roulement (33a ; 55a) et sont disposées en alternance de manière orientée dans une direction opposée et de manière décalée entre elles et sont adjacentes aux pistes de guidages (27 ; 58), opposées entre elles, de la nervure verticale (42) ou du profilé plat (57), dans lequel, entre les ouvertures de positionnement (38), subsistent des nervures de matériau qui constituent une partie des pistes de guidage (27 ; 58) de la nervure verticale (42) ou du profilé plat (57) et
les saillies de positionnement (39) s'étendent chacune avec une longueur parallèle à un axe longitudinal du deuxième rail de roulement (33b ; 55b) et sont disposées en alternance de manière orientée dans une direction opposée et de manière décalée entre elles et sont adjacentes aux pistes de guidages (27 ; 58), opposées entre elles, de la nervure verticale (42) ou du profilé plat (57), dans lequel les saillies de positionnement (39) constituent une partie des pistes de guidage (27 ; 58) de la nervure verticale (42) ou du profilé plat (57).

2. Système de rails selon la revendication 1, **caractérisé en ce que** le premier élément de complémentarité de forme (36a) et le deuxième élément de complémentarité de forme (36b) constituent des surfaces d'appui orientées l'une vers l'autre et sont appuyées les unes contre les autres dans la direction verticale vers les pistes de guidage (27 ; 58) avec les surfaces d'appui.

3. Système de rails selon la revendication 1 ou 2, **caractérisé en ce que** le premier élément de complémentarité de forme (36a) est réalisé sur la nervure verticale (42) du premier rail de roulement (33a) et le deuxième élément de complémentarité de forme (36b) est réalisé sur la nervure verticale (42) du deuxième rail de roulement (33b).

4. Système de rails selon l'une des revendications 1 à 3, **caractérisé en ce que** la première portion de surface (37a) est réalisée au niveau de la membrure inférieure (40) et/ou de la membrure supérieure (41) du premier rail de roulement (33a).

5. Système de rails selon l'une des revendications 1 à 4, **caractérisé en ce que** la première portion de surface (37a) est réalisée au niveau de la nervure verticale (42) et est adjacente au premier élément de complémentarité de forme (36a).

6. Système de rails selon l'une des revendications 1 à 5, **caractérisé en ce que** la deuxième portion de surface (37b) est réalisée au niveau de la membrure inférieure (40) et/ou de la membrure supérieure (41) du deuxième rail de roulement (33b).

7. Système de rails selon l'une des revendications 1 à 6, **caractérisé en ce que** la deuxième portion de surface (37b) est réalisée au niveau de la nervure verticale (42) et est adjacente au deuxième élément de complémentarité de forme (36b).

8. Système de rails selon la revendication 1, **caractérisé en ce que** le dispositif de liaison (34 ; 56) comprend une disposition pour la fixation d'une position relative entre le premier rail de roulement (33a ; 55a) et le deuxième rail de roulement (33b ; 55b).

9. Système de rails selon la revendication 1 ou 8, **caractérisé en ce que** le dispositif de liaison (34 ; 56) respectivement la disposition pour la fixation d'une position relative entre le premier rail de roulement (33a ; 55a) et le deuxième rail de roulement (33b ; 55b) comprend un support de liaison (46 ; 60a, 60b) qui est relié, par l'intermédiaire d'un premier moyen de fixation (47a), avec une partie d'extrémité du premier rail de roulement (33a ; 55a) et, par l'intermédiaire d'un deuxième moyen de fixation (47b), avec une partie d'extrémité du deuxième rail de roulement (33b ; 55b).

10. Système de rails selon la revendication 9, **caractérisé en ce qu'**une liaison par complémentarité de forme est prévue entre le support de liaison (46) et le premier rail de roulement (33a) et une liaison par complémentarité de forme est prévue entre le support de liaison (46) et le deuxième rail de roulement (33b).

11. Système de rails selon la revendication 10, **caractérisé en ce que** le premier rail de roulement (33a) forme, au niveau de la membrure inférieure (40) près de l'extrémité frontale (35a), un premier élément de complémentarité de forme (48a) et le deuxième rail de roulement (33b) forme, au niveau de la membrure inférieure (40) près de l'extrémité frontale (35b), un deuxième élément de complémentarité de forme (48b) et le support de liaison (46) comprend un premier élément de complémentarité de forme (49a) et un deuxième élément de complémentarité de forme (49b), dans lequel, d'une part, le premier élément de complémentarité de forme (48a) sur la membrure inférieure (40) du premier rail de roulement (33a) et le premier élément de complémentarité de forme (49a) sur le support de liaison (46) s'emboîtent l'un dans l'autre de manière complémentaire et, d'autre part, le deuxième élément de complémentarité de forme (48b) sur la membrure inférieure (40) du deuxième rail de roulement (33b) et le deuxième élément de complémentarité de forme (49b) sur le support de liaison (46) s'emboîtent l'un dans l'autre de manière complémentaire.

12. Système de rails selon la revendication 1, **caractérisé en ce que** les rails de roulement (33a, 33b ; 55a, 55b) sont fabriqués à l'aide d'un procédé de formage et par découpe à une longueur normalisée et sont munis d'un marquage (54).

13. Système de stockage (1) avec au moins un rayonnage de stockage (2) et un système de rails (20a ; 20b) s'étendant le long du rayonnage de stockage (2) et un véhicule de transport (4) pour le stockage de pièces (5) dans le rayonnage de stockage (2) respectivement le déstockage des pièces (5) hors du rayonnage de stockage (2), dans lequel le système de rails (20a ; 20b) comprend un premier rail de roulement (33a ; 55a) et un deuxième rail de roulement (33b ; 55b) et forme des pistes de guidage (23, 25, 27 ; 58) et dans lequel le véhicule de transport (4) comprend un train de roulement (16a ; 16b) avec des roues (22, 24a, 24b, 26a, 26b, 28 ; 30a, 30b) s'appuyant de manière roulante sur les pistes de guidage (23, 25, 27 ; 58) et un entraînement de roulement (19) pour l'entraînement d'une des roues (22), **caractérisé en ce que** le système de rails (20a ; 20b) est conçu selon l'une des revendications 1 à 12.

14. Système de stockage selon la revendication 13, **caractérisé en ce que** le système de rails (20a) est logé sur des plaques d'appui de rails (64) par l'intermédiaire de dispositifs de fixation (63) disposés de manière répartie le long du premier (33a) et du deuxième rail de roulement (33b), dans lequel les plaques d'appui de rails (64) sont ancrées à un composant de raccordement et dans lequel
le premier rail de roulement (33a) et le deuxième rail de roulement (33b) forment chacun la membrure inférieure (40), la membrure supérieure (41) et la nervure verticale (42) reliant celles-ci et
les dispositifs de fixation (63) comprennent chacune
une plaque de support (66) disposée en dessous du système de rails (20a) et dépassant des deux côtés du système de rails (20a) avec des portions de montage (65) et
une unité de serrage pour le montage du système de rails (20a) sur la plaque de support (66), qui comprend des plaques de serrage (67) disposées des deux côtés du système de rails (20a) et chaque plaque de serrage (67) comprend un moyen de serrage (68), dans lequel les plaques de serrage (67) forment chacune une portion de serrage (69) s'appuyant, avec une force de pression, contre la membrure inférieure (40) et une portion d'appui (70) s'appuyant contre la plaque de support (66) dans la portion de montage (65) et une ouverture de passage (71) pour le logement du moyen de serrage (68) et les moyens de serrage (68) sont ancrés aux portions de montage (65).

15. Système de stockage selon la revendication 14, **caractérisé en ce que** la plaque de support (66) est montée, au niveau des portions de montage (65), respectivement par l'intermédiaire d'un dispositif de réglage en hauteur (72) sur la plaque d'appui des rails (64).
